# EUROPÄISCHE PATENTSCHRIFT

(11) **EP 2 506 612 B1**
(45) Veröffentlichungstag und Bekanntmachung des Hinweises auf die Patenterteilung: **24.10.2018**
(21) Anmeldenummer: 12002355.1
(22) Anmeldetag: 30.03.2012
(51) Int. Cl.: H04W 8/26, H04W 4/50, H04W 8/24, H04W 4/60

(54) **Konfiguration eines in einem Mobilfunknetz mit einem Mobilfunkteilnehmeridentifikationsmodul betreibbaren mobilen Endgerätes**
Configuration of a mobile device operated with a mobile subscriber identification module in a mobile wireless network
Configuration d'un terminal mobile fonctionnant avec un module d'identification d'abonnés à un réseau mobile, dans un réseau radio mobile

(30) Priorität: 31.03.2011 DE 102011015655
(43) Veröffentlichungstag der Anmeldung: 03.10.2012
(73) Patentinhaber: Vodafone Holding GmbH, 40213 Düsseldorf (DE)
(72) Erfinder: Hying, Thomas, 40547 Düsseldorf (DE)
(74) Vertreter: Ring & Weisbrodt

(56) Entgegenhaltungen:
- EP-A1- 2 227 047
- DE-A1-102007 049 025
- US-A1- 2003 027 581
- "WAP-182-ProvArch-20010314-a", INTERNET CITATION, 14. März 2001 (2001-03-14), XP002253357, Gefunden im Internet: URL:www.wapforum.org [gefunden am 2003-09-04]

## Beschreibung

Die vorliegende Erfindung betrifft Verfahren zur zumindest teilautomatischen Konfiguration eines in einem Mobilfunknetz mit einem Mobilfunkteilnehmeridentifikationsmodul, einer sogenannten SIM (Subscriber Identity Module), betreibbaren mobilen Endgerätes, insbesondere gemäß einem GSM-(Global System for Mobile Communications), GPRS-(General Packet Radio Service), UMTS-(Universal Mobile Telecommunications System) und/oder LTE-(Long Term Evolution) Funknetzstandard, nach dem vorzugsweise ersten Registrieren des mobilen Endgerätes mit dem Mobilfunkteilnehmeridentifikationsmodul im Mobilfunknetz.

Die Konfiguration - auch Provisionierung genannt - von Funktionen und/oder Diensten für ein in einem Mobilfunknetz mit einem Mobilfunkteilnehmeridentifikationsmodul betreibbares mobiles Endgerät ist im Stand der Technik in zahlreichen Ausgestaltungen und Ausführungsformen bekannt, beispielsweise zur Nutzung von von Mobilfunknetzbetreibern angebotenen Mobilfunknetzdiensten wie Kurznachrichtendiensten bzw. Kurzmitteilungsdiensten (SMS: Short Message Service), Multimedia-Mitteilungsdiensten (MMS: Multimedia Messaging Service), WAP (Wireless Application Protocol), Anrufbeantworter (Sprachmailbox), oder dergleichen Funktionen und/oder Diensten. Dabei erfolgt die Konfiguration mittels Eingabe von entsprechenden Daten und/oder Befehlen seitens des mobilen Endgerätes bzw. seitens des Mobilfunkteilnehmeridentifikationsmoduls.

Derartige Konfigurationen von mobilen Endgeräten bzw. Mobilfunkteilnehmeridentifikationsmodulen sind zuweilen bei der ersten Inbetriebnahme eines mobilen Endgerätes bzw. eines Mobilfunkteilnehmeridentifikationsmoduls und ferner bei einem Wechsel des mobilen Endgerätes oder bei einem Wechsel eines Mobilfunkteilnehmeridentifikationsmoduls, beispielsweise bei einem Wechsel des Mobilfunknetzbetreibers, erforderlich.

Für derartige Konfigurationen von mobilen Endgeräten bzw. Mobilfunkteilnehmeridentifikationsmodulen sind im Stand der Technik verschiedene Maßnahmen bekannt. Zum einen kann die Konfiguration durch manuelle Eingabe von entsprechenden Daten und/oder Befehlen seitens des mobilen Endgerätes erfolgen. Bisher muss sich der Nutzer eines mobilen Endgerätes dazu die erforderlichen Daten und/oder Befehle auf relativ umständliche Art und Weise beschaffen, beispielsweise über das Internet, durch Anrufen einer Hotline oder dergleichen. Erschwert wird diese Beschaffung der erforderlichen Daten und/oder Befehle zusätzlich dadurch, dass die Befehle und/oder Daten in Abhängigkeit von dem Typ des mobilen Endgerätes sowie in Abhängigkeit des dem Nutzer von einem Mobilfunknetzbetreiber zur Verfügung gestellten Mobilfunkteilnehmeridentifikationsmoduls unterschiedlich sind. Zum anderen ist es bekannt, die Konfiguration von Funktionen und/oder Diensten mittels eines Kurzmitteilungsdienstes (SMS) vorzunehmen, wobei die zur Konfiguration erforderlichen Daten und/oder Befehle von einem Mobilfunknetzbetreiber über das Mobilfunknetz an das mobile Endgerät bzw. das Mobilfunkteilnehmeridentifikationsmodul übertragen werden. Im Stand der Technik sind derartige Konfigurationsverfahren unter dem Begriff OTA-Provisionierung (Over The Air Provisioning, insbesondere gemäß OMA CP Standard (OMA CP: Open Mobile Alliance Client Provisioning)) bekannt. Dazu muss der Nutzer des mobilen Endgerätes vorher Kontakt mit einer seitens des Mobilfunknetzbetreibers entsprechend eingerichteten Serviceeinrichtung aufnehmen und die für die von dem Nutzer gewünschte Konfiguration des mobilen Endgerätes bzw. des Mobilfunkteilnehmeridentifikationsmoduls erforderlichen Daten, insbesondere umfassend das mobile Endgerät identifizierende Daten, den Nutzer identifizierende Daten sowie die von dem Nutzer gewünschten Funktionen und/oder Dienste mitteilen. Diese Mitteilung kann mit einem Anruf des Nutzers bei der seitens des Mobilfunknetzbetreibers entsprechend eingerichteten Serviceeinrichtung, über das Internet oder durch Versenden einer entsprechenden Anforderungs-Kurzmitteilung, welche von dem Nutzer des mobilen Endgerätes an die entsprechende Serviceeinrichtung des Mobilfunknetzbetreibers gesendet wird, erfolgen. Wenn das mobile Endgerät bzw. das Mobilfunkteilnehmeridentifikationsmodul noch nicht zu einer Nutzung von entsprechenden Funktionen und/oder Diensten konfiguriert ist, scheidet ein Versenden einer Anforderungs-Kurzmitteilung aus. Nachdem der Nutzer des mobilen Endgerätes bzw. des Mobilfunkteilnehmeridentifikationsmoduls die zur Konfiguration erforderlichen Daten und/oder Befehle mittels einer von dem Mobilfunknetzbetreiber an das mobile Endgerät bzw. das Mobilfunkteilnehmeridentifikationsmodul übertragenen Kurzmitteilung (SMS) erhalten hat, muss dieser mitunter ferner über entsprechende manuelle Eingaben seitens des mobilen Endgerätes diese Konfiguration installieren, einrichten bzw. aktivieren. Im Stand der Technik sind diesbezüglich auch Lösungen bekannt, die eine Installation, Einrichtung bzw. Aktivierung der Daten und/oder Befehle zur Konfiguration von Funktionen und/oder Diensten zumindest teilautomatisch ermöglichen, das heißt insbesondere abgesehen von einer Aktivierungsbestätigung ohne aufwendige weitere Eingaben und/oder Interaktionen des Nutzers.

Für die meisten Nutzer sind derartige Konfigurationen von mobilen Endgeräten bzw. Mobilfunkteilnehmeridentifikationsmodulen unverständlich, umständlich und schwierig durchzuführen, so dass diese in der Regel von einer Konfiguration des mobilen Endgerätes bzw. des Mobilfunkteilnehmeridentifikationsmoduls und damit von einer Nutzung von mit dem mobilen Endgerät nutzbaren Funktionen und/oder Diensten eines Mobilfunknetzbetreibers absehen, insbesondere vor dem Hintergrund der unüberschaubar großen Anzahl unterschiedlicher mobiler Endgeräte und der umfangreich zur Verfügung stehenden Funktionen und/oder Dienste in einem Mobilfunknetz. Für Mobilfunknetzbetreiber sind derartige Konfigurationen von mobilen Endgeräten bzw. Mobilfunkteilnehmeridentifikationsmodulen hinsichtlich des apparativen und hinsichtlich des notwendigen Personalaufwandes relativ kostenintensiv.

Bedingt durch die heute gegebene Leistungsfähigkeit von mobilen Endgeräten sind die Anwendungen bzw. Applikationen, welche auf bzw. mit dem mobilen Endgerät ausführbar sind, hinsichtlich Anzahl und Einsatzbereich stark angestiegen. Darüber hinaus ist heute in der Regel nutzerindividuell bestimmbar, welche und wie viele Anwendungen ein Nutzer auf seinem mobilen Endgerät hat. Eine zumindest teilautomatische Konfiguration derartiger Anwendungen ist bisher nicht gegeben, insbesondere nicht bei Anwendungen, die Funktionen und/oder Dienste eines Mobilfunknetzes nutzen oder auf diese zurückgreifen und daher eine entsprechende Konfiguration erforderlich machen. Für die Konfiguration derartiger Anwendungen sind beispielsweise Konfigurationsdaten für Zugangspunkte, sogenannte APNs (APN: Access Point Name), Internetbrowser, MMS, E-Mail, sogenannte Data Synchronisation Services, und/oder dergleichen.

Die heute gegebene umfangreiche Anzahl unterschiedlichster mobiler Endgeräte sowie die heute gegebenen umfangreichen und vielschichtigen Funktionen, Anwendungen und/oder Dienste für ein in einem Mobilfunknetz mit einem Mobilfunkteilnehmeridentifikationsmodul betreibbares mobiles Endgerät bedingen darüber hinaus sowohl für die Nutzer mobiler Endgeräte, als auch für die Mobilfunknetzbetreiber diverse Nachteile bzw. Probleme. So müssen sich Nutzer mobiler Endgeräte in der Regel in regelmäßigen Abständen mit der Bedienung bzw. Handhabung neuer mobiler Endgeräte, Funktionen, Anwendungen und/oder Diensten auseinandersetzen. Da sich dabei in Abhängigkeit von dem jeweiligen mobilen Endgerät sowie den jeweiligen Funktionen, Anwendungen und/oder Diensten die Handhabung und/oder Bedienung derselben verändert, sind Nutzer bei einem Wechsel eines mobilen Endgerätes, insbesondere bei unterschiedlichen Typen von mobilen Endgeräten, zumindest zunächst nicht in der Lage, diese in bisher gewohnter Art und Weise handzuhaben bzw. zu bedienen. Von zahlreichen Nutzern wird dies als äußerst nachteilig empfunden, insbesondere da bei einem Wechsel des mobilen Endgerätes in der Regel die Handhabung bzw. Bedienung neu erlernt werden muss. Entsprechendes gilt aus Nutzersicht auch bei einem Wechsel des Mobilfunknetzbetreibers für Funktionen, Anwendungen und/oder Dienste für ein in den jeweiligen Mobilfunknetzen mit einem Mobilfunkteilnehmeridentifikationsmodul betreibbares mobiles Endgerät.

Bedingt durch die umfangreiche Anzahl verschiedener Typen von mobilen Endgeräten und dem Umstand, dass Mobilfunknetzbetreiber ihren Nutzern oftmals von dem Mobilfunknetzbetreiber subventionierte mobile Endgeräte zur Verfügung stellen, welche neben einer entsprechenden Kennzeichnung - einem sogenannten Branding - des mobilen Endgerätes ferner auch Mobilfunknetzbetreiber-spezifische Benutzerschnittstellen zur Bedienung bzw. Handhabung der mobilen Endgeräte sowie der mit diesen im Mobilfunknetz nutzbaren Funktionen, Anwendungen und/oder Diensten erfordern bzw. mit sich bringen, sind sowohl die Anschaffungskosten für derartige mobile Endgeräte für den Mobilfunknetzbetreiber, als auch der im Zusammenhang mit der umfangreichen Anzahl von mobilen Endgeräten verbundene Serviceeinsatz hinsichtlich apparativen Einrichtungen und Personal relativ hoch. Gleiches gilt für die ebenfalls in zahlreichen Ausgestaltungen eingesetzten Mobilfunkteilnehmeridentifikationsmodule. Hinzu kommt, dass Mobilfunknetzbetreiber oftmals für Großkunden oder sogenannte MVNOs (Mobile Virtual Network Operator), welche kein eigenes Mobilfunknetz betreiben, sondern eine Kooperation mit einem Mobilfunknetzbetreiber haben, für diese entsprechend mit deren Kennzeichnung versehene Mobilfunkteilnehmeridentifikationsmodule und mitunter auch mobile Endgeräte zur Verfügung stellen müssen. Der damit verbundene logistische und technische Aufwand bedingt in der Regel entsprechende Mehrkosten für den "echten" Mobilfunknetzbetreiber. Der Erfindung liegt in Anbetracht dieses Standes der Technik die **Aufgabe** zugrunde, eine zumindest teilautomatische Konfiguration eines in einem Mobilfunknetz mit einem Mobilfunkteilnehmeridentifikationsmodul betreibbaren mobilen Endgerätes unter Meidung der beschriebenen Nachteile zu ermöglichen. Die Konfiguration soll dabei ohne aufwendige Interaktionen des Nutzers des mobilen Endgerätes und in einem gegenüber den bisherigen Möglichkeiten der Konfiguration erweitertem Umfang ermöglicht werden. Insbesondere soll eine zumindest teilautomatische Konfiguration von Funktionen, Anwendungen und/oder Diensten für ein in einem Mobilfunknetz mit einem Mobilfunkteilnehmeridentifikationsmodul betreibbares mobiles Endgerät ermöglicht werden. Die Erfindung ist durch die angehängten Ansprüche definiert. Die Ausführungsformen und / oder Beispiele der folgenden Beschreibung, die nicht durch die beigefügten Ansprüche abgedeckt sind, werden als nicht Teil der vorliegenden Erfindung angesehen.

Zur technischen **Lösung** dieser Aufgabe wird mit der vorliegenden Erfindung ein Verfahren zur zumindest teilautomatischen Konfiguration eines in einem Mobilfunknetz mit einem Mobilfunkteilnehmeridentifikationsmodul betreibbaren mobilen Endgerätes, insbesondere gemäß einem GSM-, GPRS-, UMTS- und/oder LTE-Funknetzstandard, nach dem vorzugsweise ersten Registrieren des mobilen Endgerätes mit dem Mobilfunkteilnehmeridentifikationsmodul im Mobilfunknetz, mit folgenden seitens des Mobilfunknetzes ausgeführten Schritten vorgeschlagen:
a) Empfangen einer Kurznachricht in einem Empfangsmodul einer Konfigurationseinrichtung des Mobilfunknetzes,
   wobei die Kurznachricht das Mobilfunkteilnehmeridentifikationsmodul identifizierende Daten und das mobile Endgerät identifizierende Daten enthält;
b) Übertragen der empfangenen Kurznachricht von dem Empfangsmodul an ein erstes Prüfmodul der Konfigurationseinrichtung und an ein zweites Prüfmodul der Konfigurationseinrichtung;
c) Ermitteln von Mobilfunknetzbetreiber-spezifischen Daten für das Mobilfunkteilnehmeridentifikationsmodul durch das erste Prüfmodul anhand der das Mobilfunkteilnehmeridentifikationsmodul identifizierenden Daten;
d) Erzeugen eines ersten Konfigurationsdatensatzes durch das erste Prüfmodul,
   wobei der Konfigurationsdatensatz Mobilfunknetzbetreiber-spezifische Daten für das Mobilfunkteilnehmeridentifikationsmodul enthält;
e) Ermitteln von Endgeräte-spezifischen Daten für das mobile Endgerät durch das zweite Prüfmodul anhand der das mobile Endgerät identifizierenden Daten;
f) Erzeugen eines zweiten Konfigurationsdatensatzes durch das zweite Prüfmodul,
   wobei der Konfigurationsdatensatz Endgeräte-spezifische Daten für das mobile Endgerät enthält;
   und
g) Senden des ersten Konfigurationsdatensatzes und des zweiten Konfigurationsdatensatzes von der Konfigurationseinrichtung an das mobile Endgerät.

Das erfindungsgemäße Verfahren ermöglicht eine zumindest teilautomatische Konfiguration, insbesondere von Funktionen, Anwendungen und/oder Diensten für ein in einem Mobilfunknetz mit einem Mobilfunkteilnehmeridentifikationsmodul betreibbares mobiles Endgerät, mit einem gegenüber den bisherigen Möglichkeiten der Konfiguration erweitertem Umfang, ohne dass dabei aufwendige Interaktionen des Nutzers des mobilen Endgerätes erforderlich sind. Der Erfindung liegt dabei insbesondere die Erkenntnis zugrunde, dass durch die erfindungsgemäße Konfigurationseinrichtung des Mobilfunknetzes unter Nutzung von deren verschiedenen, bezüglich des erfindungsgemäßen Verfahrens aufeinander abgestimmten Modulen bzw. Moduleinrichtungen eine verbesserte und umfangreichere Konfiguration realisierbar ist.

Erfindungsgemäß wird insbesondere eine Konfiguration von Mobilfunknetzbetreiber-spezifischen Funktionen, Anwendungen und/oder Diensten und von Endgeräte-spezifischen Funktionen, Anwendungen und/oder Diensten ermöglicht. Mobilfunknetzbetreiber-spezifische Funktionen, Anwendungen und/oder Dienste umfassen dabei insbesondere ein Logo des Mobilfunknetzbetreibers (Betreiber-Logo), Standardtelefonbucheinträge (beispielsweise Kundenbetreuung, ADAC und/oder dergleichen), PLMN-Listen (beispielsweise für Managed Roaming und/oder dergleichen), SIM-Applikationen, und/oder dergleichen Mobilfunknetzbetreiber-spezifische Funktionen, Anwendungen und/oder Diensten. Endgeräte-spezifische Funktionen, Anwendungen und/oder Dienste umfassen dabei insbesondere sogenannte Clients des mobilen Endgerätes, wie beispielsweise Browser, Messaging- oder E-Mail-Clients, Firmwareupdates (FOTA, FUMO), Anwendungsmanagement (Application Management (SCOMO)), und/oder dergleichen Endgeräte-spezifische Funktionen, Anwendungen und/oder Dienste.

Das Empfangsmodul der Konfigurationseinrichtung des Mobilfunknetzes ist vorteilhafterweise ein zur Weiterleitung und/oder Speicherung von Kurznachrichten mittels eines Kurznachrichtendienstes des Mobilfunknetzes, sogenannten SMS (SMS: Short Message Service), ausgebildetes und/oder eingerichtetes Netzwerkelement des Mobilfunknetzes, vorzugsweise ein sogenanntes SMSC (SMSC: Short Message Service Center). Das Netzwerkelement (SMSC) des Mobilfunknetzes ist vorteilhafterweise ausgebildet und/oder eingerichtet ist, die seitens des Netzwerkelementes (SMSC) ausgeführten Verfahrensschritte eines erfindungsgemäßen Verfahrens auszuführen. Das Netzwerkelement (SMSC) ist dabei insbesondere ausgebildet und/oder eingerichtet, die empfangene Kurznachricht (SMS) mit das Mobilfunkteilnehmeridentifikationsmodul identifizierenden Daten und das mobile Endgerät identifizierenden Daten an das erste Prüfmodul der Konfigurationseinrichtung und an das zweite Prüfmodul der Konfigurationseinrichtung zu übertragen. Vorteilhafterweise ist dazu seitens des Netzwerkelements (SMSC) eine Doppelung der empfangenen Kurznachricht (SMS) vorgesehen.

Als die das Mobilfunkteilnehmeridentifikationsmodul (SIM) identifizierenden Daten werden vorteilhafterweise die sogenannte IMSI (IMSI: International Mobile Subscriber Identity) und/oder die sogenannte MSISDN (MSISDN: Mobile Subscriber ISDN Number; ISDN: Integrated Services Digital Network) verwendet.

Als die das mobile Endgerät identifizierenden Daten wird vorteilhafterweise die sogenannte IMEI (IMEI: International Mobile Station Equipment Identity) verwendet.

Eine vorteilhafte Ausgestaltung der Erfindung sieht vor, dass das erste Prüfmodul der Konfigurationseinrichtung Mobilfunknetzbetreiber-spezifische Daten für das Mobilfunkteilnehmeridentifikationsmodul durch Abfrage einer Datenbank ermittelt, wobei in der Datenbank Mobilfunknetzbetreiber-spezifische Daten über Funktionen, Anwendungen und/oder Dienste des Mobilfunknetzes verwaltet werden, welche für Mobilfunkteilnehmeridentifikationsmodule seitens des Mobilfunknetzes jeweils vorgesehen bzw. eingerichtet sind. In einer vorteilhaften Ausgestaltung der Erfindung ist bzw. wird das erste Prüfmodul von einem sogenannten SIM OTA Server ausgebildet, welcher auf eine Datenbank mit Mobilfunknetzbetreiber-spezifischen Daten über Funktionen, Anwendungen und/oder Dienste des Mobilfunknetzes zugreifen kann. Die Datenbank genügt und verwendet dabei vorteilhafterweise als Anwendungsprotokoll ein sogenanntes LDAP (LDAP: Light Weight Directory Access Protocol).

Eine weitere vorteilhafte Ausgestaltung der Erfindung sieht vor, dass das zweite Prüfmodul der Konfigurationseinrichtung Endgeräte-spezifische Daten für das mobile Endgerät durch Abfrage einer Datenbank ermittelt, wobei in der Datenbank Endgeräte-spezifische Daten über von mobilen Endgeräten unterstützte Funktionen, Anwendungen und/oder Dienste verwaltet werden. In einer vorteilhaften Ausgestaltung der Erfindung ist bzw. wird das zweite Prüfmodul von wenigstens einer zur Bestimmung des Typs von mobilen Endgeräten ausgebildete und/oder eingerichtete Recheneinrichtung des Mobilfunknetzes, einem sogenannten Device Checker, ausgebildet, welche auf eine Datenbank mit Endgeräte-spezifischen Daten über von mobilen Endgeräten unterstützte Funktionen, Anwendungen und/oder Dienste zugreifen kann.

Das erfindungsgemäße Verfahren an sich ist vorteilhafterweise derart ausgelegt, dass dieses zumindest weitestgehend unabhängig von dem jeweiligen Typ eines mobilen Endgerätes und/oder des von bzw. mit diesem genutzten Mobilfunkteilnehmeridentifikationsmoduls ausführbar ist. Dies setzt voraus, dass das zweite Prüfmodul der Konfigurationseinrichtung des Mobilfunknetzes für den jeweiligen Typ eines mobilen Endgerätes anhand der das mobile Endgerät identifizierenden Daten entsprechende Endgeräte-spezifische Daten ermitteln und einen entsprechenden Konfigurationsdatensatz erzeugen kann.

In einer bevorzugten Ausgestaltung der Erfindung weist das zweite Prüfmodul neben der zur Bestimmung des Typs von mobilen Endgeräten ausgebildeten und/oder eingerichteten Recheneinrichtung (Device Checker) eine weitere Recheneinrichtung, einen sogenannten Device Management Server, auf, welche mit der ersten Recheneinrichtung (Device Checker) verbunden ist. Die erste Recheneinrichtung (Device Checker) realisiert dabei vorteilhafterweise eine Bestimmung des Typs von mobilen Endgeräten und die weitere Recheneinrichtung (Device Management Server) realisiert dann eine Ermittlung der Endgeräte-spezifischen Daten für den von der ersten Recheneinrichtung (Device Checker) bestimmten Typ eines mobilen Endgerätes. Dazu greift die weitere Recheneinrichtung (Device Management Server) auf die Datenbank mit Endgeräte-spezifischen Daten über von mobilen Endgeräten unterstützte Funktionen, Anwendungen und/oder Dienste zu. Vorteilhafterweise realisiert die weitere Recheneinrichtung (Device Management Server) dann ferner eine Erzeugung des Konfigurationsdatensatzes mit Endgeräte-spezifischen Daten für das mobile Endgerät. Die erste Recheneinrichtung (Device Checker) und die weitere Recheneinrichtung (Device Management Server) können in einer weiteren Ausgestaltung der Erfindung auch von einer einzelnen Recheneinrichtung ausgebildet werden.

In einer weiteren vorteilhaften Ausgestaltung der Erfindung wird der erste Konfigurationsdatensatz mittels einer Kurznachricht (SMS) an das mobile Endgerät gesendet, vorzugsweise mittels einer für den Nutzer des mobilen Endgerätes nicht sichtbaren Kurznachricht, insbesondere einer sogenannten SIM OTA SMS gemäß der Spezifikation ETSI TS 102226 "Remote APDU Structure for UICC based Applications".

Eine weitere vorteilhafte Ausgestaltung der Erfindung sieht vor, dass der zweite Konfigurationsdatensatz über eine zwischen dem zweiten Prüfmodul und dem mobilen Endgerät aufgebaute Kommunikationsverbindung, einer sogenannten Session, an das mobile Endgerät gesendet wird. Eine bevorzugte Ausgestaltung der Erfindung ist dadurch gekennzeichnet, dass das zweite Prüfmodul zur Einrichtung der Kommunikationsverbindung (Session) eine Kurznachricht, insbesondere eine sogenannte Bootstrap SMS, an das mobile Endgerät sendet, wobei die Kurznachricht (Bootstrap SMS) Daten, sogenannte Settings, zum Aufbau der Kommunikationsverbindung (Session) enthält, vorzugsweise Adressierungsdaten zur Adressierung der Endgeräte-spezifischen Daten über von mobilen Endgeräten unterstützte Funktionen, Anwendungen und/oder Dienste verwaltenden Datenbank, insbesondere Server URL, APN, Proxy und/oder dergleichen zur Realisierung der Kommunikationsverbindung bzw. Session als sogenannte IP-Verbindung zwischen dem zweiten Prüfmodul und dem mobilen Endgerät erforderliche Daten, insbesondere Adressierungsdaten, und/oder Authentisierungsdaten zur Authentisierung des mobilen Endgerätes gegenüber der Endgeräte-spezifischen Daten über von mobilen Endgeräten unterstützte Funktionen, Anwendungen und/oder Dienste verwaltenden Datenbank. Vorteilhafterweise ist die Kurznachricht (Bootstrap SMS) eine für den Nutzer des mobilen Endgerätes nicht sichtbare Kurznachricht, insbesondere eine sogenannte OMA CP SMS gemäß der Spezifikation Open Mobile Provisioning Architecture Overview OMA-WAP-TS-ProvArch-V1_1-20090421-C. Die Authentisierungsdaten, mit Hilfe derer sich das mobile Endgerät bei dem zweiten Prüfmodul, insbesondere der weiteren Recheneinrichtung (Device Management Server), erfolgreich authentisieren kann, sind vorteilhafterweise gemäß einem OMA Device Management Standard (OMA: Open Mobile Alliance). Eine weitere Ausgestaltung der Erfindung sieht vor, dass das zweite Prüfmodul bei eingerichteter Kommunikationsverbindung (Session) aus dem mobilen Endgerät Informationen, vorzugsweise den sogenannten Device Management Tree (DM-Tree), über von dem mobilen Endgerät unterstützte Funktionen, Anwendungen und/oder Dienste ausliest, mit diesen Informationen (DM-Tree) die Endgeräte-spezifischen Daten über von dem mobilen Endgerät unterstützte Funktionen, Anwendungen und/oder Dienste aus der Datenbank abfragt, und aus den abgefragten Daten den zweiten Konfigurationsdatensatz erzeugt.

Zur technischen **Lösung** der eingangs genannten Aufgabe wird mit der vorliegenden Erfindung ferner ein Verfahren zur zumindest teilautomatischen Konfiguration eines in einem Mobilfunknetz mit einem Mobilfunkteilnehmeridentifikationsmodul betreibbaren mobilen Endgerätes, insbesondere gemäß einem GSM-, GPRS-, UMTS- und/oder LTE-Funknetzstandard, nach dem vorzugsweise ersten Registrieren des mobilen Endgerätes mit dem Mobilfunkteilnehmeridentifikationsmodul im Mobilfunknetz, mit folgenden seitens des mobilen Endgerätes bzw. des Mobilfunkteilnehmeridentifikationsmoduls ausgeführten Schritten vorgeschlagen:
a) Senden einer Kurznachricht von dem mobilen Endgerät an eine Konfigurationseinrichtung des Mobilfunknetzes,
   wobei die Kurznachricht das Mobilfunkteilnehmeridentifikationsmodul identifizierende Daten und das mobile Endgerät identifizierende Daten enthält;
b) Empfang eines ersten Konfigurationsdatensatzes und eines zweiten Konfigurationsdatensatzes durch das mobile Endgerät,
   wobei der erste Konfigurationsdatensatz Mobilfunknetzbetreiber-spezifische Daten für das Mobilfunkteilnehmeridentifikationsmodul enthält und der zweite Konfigurationsdatensatz Endgeräte-spezifische Daten für das mobile Endgerät enthält;
c) Installation des ersten Konfigurationsdatensatzes seitens des Mobilfunkteilnehmeridentifikationsmodul;
   und
d) Installation des zweiten Konfigurationsdatensatzes seitens des mobilen Endgerätes.

Das erfindungsgemäße Verfahren ermöglicht eine zumindest teilautomatische Konfiguration, insbesondere von Funktionen, Anwendungen und/oder Diensten für ein in einem Mobilfunknetz mit einem Mobilfunkteilnehmeridentifikationsmodul betreibbares mobiles Endgerät, mit einem gegenüber den bisherigen Möglichkeiten der Konfiguration erweitertem Umfang, ohne dass dabei aufwendige Interkationen des Nutzers des mobilen Endgerätes erforderlich sind. Für den Nutzer des mobilen Endgerätes stehen bei erfindungsgemäßer Verfahrensführung vorteilhafterweise nach wenigen Sekunden sämtliche Zugriffsmöglichkeiten auf Funktionen, Anwendungen und/oder Dienste zur Verfügung, ohne dass der Nutzer dazu Überlegungen und/oder aufwendige Eingaben erbringen muss. Der Nutzer des mobilen Endgerätes muss insbesondere lediglich das Mobilfunkteilnehmeridentifikationsmodul in das mobile Endgerät einsetzen und das mobile Endgerät einschalten.

Als die das Mobilfunkteilnehmeridentifikationsmodul (SIM) identifizierenden Daten werden vorteilhafterweise die sogenannte IMSI und/oder die sogenannte MSISDN verwendet.

Als die das mobile Endgerät identifizierenden Daten wird vorteilhafterweise die sogenannte IMEI verwendet.

Vorteilhafterweise wird der erste Konfigurationsdatensatz mittels einer Kurznachricht (SMS) empfangen, vorzugsweise mittels einer für den Nutzer des mobilen Endgerätes nicht sichtbaren Kurznachricht, insbesondere einer sogenannten SIM OTA SMS gemäß der Spezifikation ETSI TS 102226 "Remote APDU Structure for UICC based Applications".

In einer weiteren vorteilhaften Ausgestaltung der Erfindung wird der zweite Konfigurationsdatensatz über eine zwischen dem mobilen Endgerät und der Konfigurationseinrichtung des Mobilfunknetzes aufgebaute Kommunikationsverbindung, einer sogenannten Session, empfangen. Vorteilhafterweise empfängt das mobile Endgerät zur Einrichtung der Kommunikationsverbindung (Session) eine Kurznachricht, insbesondere eine sogenannte Bootstrap SMS. Die Kurznachricht (Bootstrap SMS) enthält dabei Daten, sogenannte Settings, zum Aufbau der Kommunikationsverbindung (Session), vorzugsweise Adressierungsdaten zur Adressierung der Endgeräte-spezifischen Daten über von mobilen Endgeräten unterstützte Funktionen, Anwendungen und/oder Dienste verwaltenden Datenbank der Konfigurationseinrichtung des Mobilfunknetzes, insbesondere Server URL, APN, Proxy und/oder dergleichen, und/oder Authentisierungsdaten zur Authentisierung des mobilen Endgerätes gegenüber der Endgeräte-spezifischen Daten über von mobilen Endgeräten unterstützte Funktionen, Anwendungen und/oder Dienste verwaltenden Datenbank der Konfigurationseinrichtung des Mobilfunknetzes. Vorteilhafterweise ist die Kurznachricht (Bootstrap SMS) eine für den Nutzer des mobilen Endgerätes nicht sichtbare Kurznachricht, insbesondere eine sogenannte OMA CP SMS gemäß der Spezifikation Open Mobile Provisioning Architecture Overview OMA-WAP-TS-ProvArch-V1_1-20090421-C. Die Authentisierungsdaten, mit Hilfe derer sich das mobile Endgerät bei der Konfigurationseinrichtung des Mobilfunknetzes erfolgreich authentisieren kann, sind vorteilhafterweise gemäß einem OMA Device Management Standard (OMA: Open Mobile Alliance).

Eine weitere besonders vorteilhafte Ausgestaltung der Erfindung sieht vor, dass bei bzw. mit dem vorzugsweise ersten Registrieren des mobilen Endgerätes mit dem Mobilfunkteilnehmeridentifikationsmodul im Mobilfunknetz eine Anwendung, vorzugsweise eine sogenannte SIM Tool Kit Application, auf dem Mobilfunkteilnehmeridentifikationsmodul ausgeführt wird, wobei im Rahmen der Ausführung der Anwendung (SIM Tool Kit Application) vorzugsweise automatisch die das Mobilfunkteilnehmeridentifikationsmodul identifizierende Daten und das mobile Endgerät identifizierende Daten enthaltende Kurznachricht (SMS) an die Konfigurationseinrichtung des Mobilfunknetzes gesendet wird. Die Anwendung (SIM Tool Kit Application) auf dem Mobilfunkteilnehmeridentifikationsmodul ist vorteilhafterweise ausgebildet und/oder eingerichtet, wenigstens zwei zuletzt genutzte Kombinationen bzw. Verpaarungen von mit dem Mobilfunkteilnehmeridentifikationsmodul verwendeten mobilen Endgeräten zu erfassen und seitens des Mobilfunkteilnehmeridentifikationsmoduls zu speichern. Dabei werden vorzugsweise die das jeweilige mobile Endgerät identifizierenden Daten, insbesondere die IMEI, den das Mobilfunkteilnehmeridentifikationsmodul identifizierenden Daten, insbesondere der IMSI und/oder der MSISDN, zugeordnet. Vorteilhafterweise ist die Anwendung (SIM Tool Kit Application) auf dem Mobilfunkteilnehmeridentifikationsmodul ausgebildet und/oder eingerichtet, zu erkennen, ob die aktuelle Kombination bzw. Verpaarung des mit dem Mobilfunkteilnehmeridentifikationsmodul verwendeten mobilen Endgerätes bereits zu einem vorherigen Zeitpunkt genutzt wurde, wobei vorzugsweise ein Vergleich der aktuell genutzten Kombination bzw. Verpaarung mit wenigstens einer zuvor gespeicherten Kombination bzw. Verpaarung erfolgt, und bejahendenfalls keine Konfiguration erfolgt. In einer bevorzugten Ausgestaltung der Erfindung sind die letzten fünf Kombinationen bzw. Verpaarungen von mit dem Mobilfunkteilnehmeridentifikationsmodul verwendeten mobilen Endgeräten seitens des Mobilfunkteilnehmeridentifikationsmoduls erfasst bzw. gespeichert. Durch die Erfassung bzw. Speicherung der zuletzt genutzten Kombinationen bzw. Verpaarungen von mit dem Mobilfunkteilnehmeridentifikationsmodul verwendeten mobilen Endgeräten seitens des Mobilfunkteilnehmeridentifikationsmoduls ist sicherstellbar, dass Konfigurationsprozesse gemäß dem erfindungsgemäßen Verfahren nicht bei jedem Wechsel des Mobilfunkteilnehmeridentifikationsmoduls in ein anderes mobiles Endgerät initiiert werden. Der Erfindung liegt dabei die Erkenntnis zugrunde, dass Nutzer mitunter verschiedene mobile Endgeräte besitzen und diese je nach Bedarf mit dem Mobilfunkteilnehmeridentifikationsmodul nutzen, beispielsweise ein mobiles Endgerät für den beruflichen Einsatz und ein mobiles Endgerät für den Freizeiteinsatz. Sofern das Mobilfunkteilnehmeridentifikationsmodul schon mit beiden mobilen Endgeräten benutzt wurde, würde bei einem Wechsel des Mobilfunkteilnehmeridentifikationsmoduls von dem einen mobilen Endgerät in das andere mobile Endgerät jedes Mal der erfindungsgemäße Konfigurationsprozess ausgeführt, obwohl die beiden mobilen Endgeräte schon zu einem vorherigen Zeitpunkt entsprechend konfiguriert waren. Vorteilhafterweise werden so erfindungsgemäß die Ressourcen des Mobilfunknetzes geschont.

In einer weiteren besonders vorteilhaften Ausgestaltung der Erfindung erfolgt nach der Installation bzw. Einrichtung von Endgerät-spezifischen Daten für von dem mobilen Endgerät unterstützte Funktionen, Anwendungen und/oder Dienste seitens des Endgerätes vorzugsweise automatisch eine Synchronisierung von Teilnehmer- bzw. Nutzer-spezifischen Daten für bzw. von Funktionen, Anwendungen und/oder Diensten des mobilen Endgerätes, wobei Teilnehmer- bzw. Nutzer-spezifische Daten für bzw. von Funktionen, Anwendungen und/oder Diensten des mobilen Endgerätes in einer Datenbank des Mobilfunknetzes, insbesondere einer sogenannten Cloud, verwaltet werden. Vorteilhafterweise wird zur Synchronisierung von Teilnehmer- bzw. Nutzer-spezifischen Daten vorzugsweise automatisch eine Anwendung, insbesondere eine sogenannte SIM Tool Kit Application, auf dem Mobilfunkteilnehmeridentifikationsmodul ausgeführt. Die Anwendung (SIM Tool Kit Application) ist dabei vorzugsweise ein Smart Card Web Server. Der Smart Card Web Server weist als Anwendung, insbesondere als sogenannte SIM Application, vorzugsweise einen SyncML-Client auf. Der SyncML-Client ist vorteilhafterweise gemäß einem OMA-Data-Synchronisation-Standard. Erfindungsgemäß werden so neben Mobilfunknetzbetreiber-spezifischen Funktionen, Anwendungen und/oder Diensten und Endgeräte-spezifischen Funktionen, Anwendungen und/oder Diensten ferner auch Teilnehmer-spezifische Funktionen, Anwendungen und/oder Dienste, insbesondere Anwendungen, Anwendungsdaten des Teilnehmers (beispielsweise MP3-Dateien, Dateien von Fotos), Kurznachrichten (SMS), Mulimedia-Mitteilungen (MMS), E-Mails und/oder dergleichen Teilnehmer-spezifische Daten von Funktionen, Anwendungen und/oder Diensten zumindest teilautomatisch unter Nutzung von verschiedenen, bezüglich des erfindungsgemäßen Verfahrens aufeinander abgestimmten Einrichtungen des Mobilfunknetzes konfiguriert. Der Schritt der Synchronisierung von Teilnehmer- bzw. Nutzer-spezifischen Daten muss dabei nicht zwangsläufig erst nach der Einrichtung von Endgerät-spezifischen Daten erfolgen. Der Smart Card Web Server, über den die Synchronisierung mit der Web Cloud erfolgt, kann entweder bereits vorkonfiguriert sein, so dass es möglich ist über diesen Smart Card Web Server durch Öffnen eines Kommunikationskanals via BIP (BIP: Bearer Independent Protocol) direkt auf die Cloud zuzugreifen, ohne dass zuvor ein Browser des Endgerätes via OMA CP provisioniert wurde. Oder, wenn der Smart Card Web Server nicht bereits vorkonfiguriert ist, kann dieser mittels SIM OTA mit Konfigurationsdaten provisioniert werden.

Gegenstand der vorliegenden Erfindung ist ferner ein Mobilfunkteilnehmeridentifikationsmodul (SIM) für den Betrieb eines mobilen Endgerätes in einem Mobilfunknetz, insbesondere gemäß einem GSM-, GPRS-, UMTS- und/oder LTE-Funknetzstandard, welches ausgebildet und/oder eingerichtet ist, die seitens des Mobilfunkteilnehmeridentifikationsmoduls (SIM) ausgeführten Verfahrensschritte eines erfindungsgemäßen Verfahrens auszuführen.

Vorteilhafterweise ist das Mobilfunkteilnehmeridentifikationsmodul (SIM) eine GUSIM. In einer besonders bevorzugten Ausgestaltung der Erfindung weist die GUSIM eine Einrichtung zum Austausch von Daten über eine Nahfeldkommunikation (NFC: Near Field Communication) auf. Das erfindungsgemäße Mobilfunkteilnehmeridentifikationsmodul (SIM) kann so mit entsprechenden Anwendungen, Funktionen und/oder Diensten vorteilhafterweise für eine Zugangskontrolle, insbesondere bei Zugangsberechtigungen zu Gebäuden nach Art eines Schlüssels oder als Schlüssel, Zeiterfassungen, insbesondere zur Arbeitszeiterfassung, und/oder für ein bargeldloses Bezahlen verwendet werden. Die GUSIM weist in einer bevorzugten Ausgestaltung für Anwendungen, Funktionen und/oder Dienste einen Speicherplatz mit einer Größe von 64kByte oder 256 kByte auf. Vorteilhafterweise ist die Bandbreite der GUSIM-Schnittstelle derart, dass Echtzeitanwendungen ausführbar sind. Vorteilhafterweise ist dabei eine Bandbreite von mindestens 12 Mbit/s vorgesehen.

Darüber hinaus ist Gegenstand der vorliegenden Erfindung eine Recheneinrichtung (Device Checker) eines Mobilfunknetzes, insbesondere gemäß einem GSM-, GPRS-, UMTS- und/oder LTE-Funknetzstandard, zur Bestimmung des Typs von mobilen Endgeräten, welche ausgebildet und/oder eingerichtet ist, die seitens der Recheneinrichtung (Device Checker) ausgeführten Verfahrensschritte eines erfindungsgemäßen Verfahrens auszuführen. Die Recheneinrichtung (Device Checker) ist vorteilhafterweise Bestandteil des zweiten Prüfmoduls der Konfigurationseinrichtung des Mobilfunknetzes.

Gegenstand der vorliegenden Erfindung ist darüber hinaus eine Recheneinrichtung (Device Management Server) eines Mobilfunknetzes, insbesondere gemäß einem GSM-, GPRS-, UMTS- und/oder LTE-Funknetzstandard, zur Verwaltung von in dem Mobilfunknetz betreibbaren mobilen Endgeräten und/oder zur Verwaltung von Endgeräte-spezifischen Daten für von in dem Mobilfunknetz betreibbaren mobilen Endgeräten unterstützte Funktionen, Anwendungen und/oder Dienste, welche ausgebildet und/oder eingerichtet ist, die seitens der Recheneinrichtung (Device Management Server) ausgeführten Verfahrensschritte eines erfindungsgemäßen Verfahrens auszuführen. Die Recheneinrichtung (Device Management Server) ist vorteilhafterweise Bestandteil des zweiten Prüfmoduls der Konfigurationseinrichtung des Mobilfunknetzes.

Mit der vorliegenden Erfindung werden in einer weiteren vorteilhaften Ausgestaltung ein Verfahren und ein System zur zumindest teilautomatischen Konfiguration von Funktionen, Anwendungen und/oder Diensten für ein in einem Mobilfunknetz mit einem Mobilfunkteilnehmeridentifikationsmodul (SIM) betreibbares mobiles Endgerät, insbesondere gemäß einem GSM-, GPRS-, UMTS- und/oder LTE-Funknetzstandard, vorgeschlagen, wobei bei bzw. mit dem vorzugsweise ersten Registrieren bzw. Einbuchen des mobilen Endgerätes mit dem Mobilfunkteilnehmeridentifikationsmodul (SIM) im Mobilfunknetz eine Anwendung (SIM Tool Kit Application) auf dem Mobilfunkteilnehmeridentifikationsmodul (SIM) ausgeführt wird, wobei im Rahmen der Ausführung der Anwendung (SIM Tool Kit Application) vorzugsweise automatisch das Mobilfunkteilnehmeridentifikationsmodul (SIM) identifizierende Daten (IMSI, MSISDN) und das mobile Endgerät identifizierende Daten (IMEI) als Kurznachricht (SMS) mittels eines Kurznachrichtendienstes (SMS) des Mobilfunknetzes an ein zur Weiterleitung und/oder Speicherung von Kurznachrichten (SMS) ausgebildetes und/oder eingerichtetes Netzwerkelement (SMSC) des Mobilfunknetzes, gesendet werden, bei Empfang der das Mobilfunkteilnehmeridentifikationsmodul (SIM) identifizierende Daten (IMSI, MSISDN) und das mobile Endgerät identifizierende Daten (IMEI) enthaltenden Kurznachricht (SMS) seitens des zur Weiterleitung und/oder Speicherung von Kurznachrichten (SMS) ausgebildeten und/oder eingerichteten Netzwerkelements (SMSC) des Mobilfunknetzes die empfangene, das Mobilfunkteilnehmeridentifikationsmodul (SIM) identifizierende Daten (IMSI, MSISDN) und das mobile Endgerät identifizierende Daten (IMEI) enthaltende Kurznachricht (SMS) von dem zur Weiterleitung und/oder Speicherung von Kurznachrichten (SMS) ausgebildeten und/oder eingerichteten Netzwerkelement (SMSC) des Mobilfunknetzes an eine zur Konfiguration von Mobilfunknetzbetreiber-spezifischen Funktionen, Anwendungen und/oder Diensten von mobilen Endgeräten und/oder von Mobilfunkteilnehmeridentifikationsmodulen (SIM) im Mobilfunknetz ausgebildete und/oder eingerichtete Recheneinrichtung (SIM OTA Server) des Mobilfunknetzes und an eine zur Bestimmung des Typs von mobilen Endgeräten ausgebildete und/oder eingerichtete Recheneinrichtung (Device Checker) des Mobilfunknetzes weitergeleitet wird, bei Empfang der weitergeleiteten, das Mobilfunkteilnehmeridentifikationsmodul (SIM) identifizierende Daten (IMSI, MSISDN) und das mobile Endgerät identifizierende Daten (IMEI) enthaltenden Kurznachricht (SMS) seitens der zur Konfiguration von Mobilfunknetzbetreiber-spezifischen Funktionen, Anwendungen und/oder Diensten von mobilen Endgeräten und/oder Mobilfunkteilnehmeridentifikationsmodulen (SIM) im Mobilfunknetz ausgebildeten und/oder eingerichteten Recheneinrichtung (SIM OTA Server) des Mobilfunknetzes von dieser zur Konfiguration von Mobilfunknetzbetreiber-spezifischen Funktionen, Anwendungen und/oder Diensten von mobilen Endgeräten und/oder Mobilfunkteilnehmeridentifikationsmodulen (SIM) im Mobilfunknetz ausgebildeten und/oder eingerichteten Recheneinrichtung (SIM OTA Server) des Mobilfunknetzes aus der weitergeleiteten, das Mobilfunkteilnehmeridentifikationsmodul (SIM) identifizierende Daten (IMSI, MSISDN) und das mobile Endgerät identifizierende Daten (IMEI) enthaltenden Kurznachricht (SMS) die das Mobilfunkteilnehmeridentifikationsmodul (SIM) identifizierenden Daten (IMSI, MSISDN) ermittelt werden, mit den ermittelten, das Mobilfunkteilnehmeridentifikationsmodul (SIM) identifizierenden Daten (IMSI, MSISDN) eine Abfrage einer Datenbank (LDAP) des Mobilfunknetzes erfolgt, wobei in der Datenbank (LDAP) Mobilfunknetzbetreiber-spezifische Daten über Funktionen, Anwendungen und/oder Dienste des Mobilfunknetzes, welche für Mobilfunkteilnehmeridentifikationsmodule (SIM) jeweils seitens des Mobilfunknetzes vorgesehen bzw. eingerichtet sind, verwaltet werden, und auf Basis der Daten in der Antwort auf die Abfrage der Datenbank (LDAP) des Mobilfunknetzes Mobilfunknetzbetreiber-spezifische Daten der für das Mobilfunkteilnehmeridentifikationsmodul (SIM) seitens des Mobilfunknetzes vorgesehenen bzw. eingerichteten Funktionen, Anwendungen und/oder Dienste des Mobilfunknetzes als Kurznachricht (SMS) mittels eines Kurznachrichtendienstes (SMS) des Mobilfunknetzes über das zur Weiterleitung und/oder Speicherung von Kurznachrichten (SMS) ausgebildete und/oder eingerichtete Netzwerkelement (SMSC) des Mobilfunknetzes an das Mobilfunkteilnehmeridentifikationsmodul (SIM) gesendet werden, bei Empfang der Kurznachricht (SMS) mit Mobilfunknetzbetreiber-spezifischen Daten der für das Mobilfunkteilnehmeridentifikationsmodul (SIM) seitens des Mobilfunknetzes vorgesehenen bzw. eingerichteten Funktionen, Anwendungen und/oder Dienste des Mobilfunknetzes seitens des Mobilfunkteilnehmeridentifikationsmoduls (SIM) eine Anwendung (SIM Tool Kit Application) auf dem Mobilfunkteilnehmeridentifikationsmodul (SIM) ausgeführt wird, wobei im Rahmen der Ausführung der Anwendung (SIM Tool Kit Application) die Mobilfunknetzbetreiber-spezifischen Daten der für das Mobilfunkteilnehmeridentifikationsmodul (SIM) seitens des Mobilfunknetzes vorgesehenen bzw. eingerichteten Funktionen, Anwendungen und/oder Dienste des Mobilfunknetzes seitens des Mobilfunkteilnehmeridentifikationsmoduls (SIM) vorzugsweise automatisch installiert bzw. eingerichtet werden, bei Empfang der weitergeleiteten, das Mobilfunkteilnehmeridentifikationsmodul (SIM) identifizierende Daten (IMSI, MSISDN) und das mobile Endgerät identifizierende Daten (IMEI) enthaltenden Kurznachricht (SMS) seitens der zur Bestimmung des Typs von mobilen Endgeräten ausgebildeten und/oder eingerichteten Recheneinrichtung (Device Checker) des Mobilfunknetzes von dieser zur Bestimmung des Typs von mobilen Endgeräten ausgebildeten und/oder eingerichteten Recheneinrichtung (Device Checker) des Mobilfunknetzes aus der weitergeleiteten, das Mobilfunkteilnehmeridentifikationsmodul (SIM) identifizierende Daten (IMSI, MSISDN) und das mobile Endgerät identifizierende Daten (IMEI) enthaltenden Kurznachricht (SMS) die das mobile Endgerät identifizierenden Daten (IMEI) und die das Mobilfunkteilnehmeridentifikationsmodul (SIM) identifizierenden Daten (IMSI, MSISDN) ermittelt werden, die ermittelten, das mobile Endgerät identifizierenden Daten (IMEI) und die das Mobilfunkteilnehmeridentifikationsmodul (SIM) identifizierenden Daten (IMSI, MSISDN) an eine zur Verwaltung von mobilen Endgeräten ausgebildete und/oder eingerichtete Recheneinrichtung (Device Management Service) des Mobilfunknetzes übergeben werden, von der zur Verwaltung von mobilen Endgeräten ausgebildeten und/oder eingerichteten Recheneinrichtung (Device Management Service) des Mobilfunknetzes anhand der übergebenen, das mobile Endgerät identifizierenden Daten (IMEI) der Typ des mobilen Endgerätes ermittelt wird, und von der zur Verwaltung von mobilen Endgeräten ausgebildeten und/oder eingerichteten Recheneinrichtung (Device Management Service) des Mobilfunknetzes mittels eines Kurznachrichtendienstes (SMS) des Mobilfunknetzes eine Kurznachricht (Bootstrap SMS) mit Daten (Settings) zum Aufbau einer über das Mobilfunknetz erfolgenden Kommunikationsverbindung zwischen dem mobilen Endgerät und einer Recheneinrichtung (Device Management Server) des Mobilfunknetzes an das mobile Endgerät gesendet wird, wobei die Recheneinrichtung (Device Management Server) des Mobilfunknetzes ausgebildet und/oder eingerichtet ist, Endgeräte-spezifische Daten für von mobilen Endgeräten unterstützte Funktionen, Anwendungen und/oder Dienste zu verwalten, bei Empfang der Daten (Settings) zum Aufbau einer über das Mobilfunknetz erfolgenden Kommunikationsverbindung zwischen dem mobilen Endgerät und der Recheneinrichtung (Device Management Server) des Mobilfunknetzes enthaltenden Kurznachricht (Bootstrap SMS) seitens des mobilen Endgerätes von dem mobilen Endgerät aus dieser Kurznachricht (Bootstrap SMS) die Daten (Settings) zum Aufbau einer über das Mobilfunknetz erfolgenden Kommunikationsverbindung (Session) zwischen dem mobilen Endgerät und der Recheneinrichtung (Device Management Server) des Mobilfunknetzes ermittelt werden, diese ermittelten Daten (Settings) zum Aufbau einer über das Mobilfunknetz erfolgenden Kommunikationsverbindung (Session) zwischen dem mobilen Endgerät und der Recheneinrichtung (Device Management Server) des Mobilfunknetzes seitens des mobilen Endgerätes vorzugsweise automatisch installiert bzw. einrichtet werden, vorzugsweise automatisch eine entsprechende Kommunikationsverbindung (Session) zwischen dem mobilen Endgerät und der Recheneinrichtung (Device Management Server) des Mobilfunknetzes aufgebaut wird, im Rahmen der zwischen dem mobilen Endgerät und der Recheneinrichtung (Device Management Server) des Mobilfunknetzes aufgebauten Kommunikationsverbindung (Session) von der Recheneinrichtung (Device Management Server) des Mobilfunknetzes aus dem mobilen Endgerät Daten über von dem mobilen Endgerät unterstützte Funktionen, Anwendungen und/oder Dienste ausgelesen werden, anhand dieser ausgelesenen Daten über von dem mobilen Endgerät unterstützte Funktionen, Anwendungen und/oder Dienste die von dem mobilen Endgerät unterstützten Funktionen, Anwendungen und/oder Dienste ermittelt werden, Endgerät-spezifische Daten für die entsprechend ermittelten, von dem mobilen Endgerät unterstützten Funktionen, Anwendungen und/oder Dienste an das mobile Endgerät übermittelt werden, und bei Empfang der Endgerät-spezifischen Daten seitens des mobilen Endgerätes () diese Daten vorzugsweise automatisch seitens des mobilen Endgerätes installiert bzw. eingerichtet werden.

Weitere Einzelheiten, Merkmale und Vorteile der Erfindung werden nachfolgend anhand des in der Figur der Zeichnung dargestellten Ausführungsbeispiels näher erläutert. Dabei zeigt:
- Fig.: 1 in einer schematischen Darstellung ein Ausführungsbeispiel für eine zumindest teilautomatische Konfiguration eines in einem Mobilfunknetz mit einem Mobilfunkteilnehmeridentifikationsmodul betreibbaren mobilen Endgerätes.

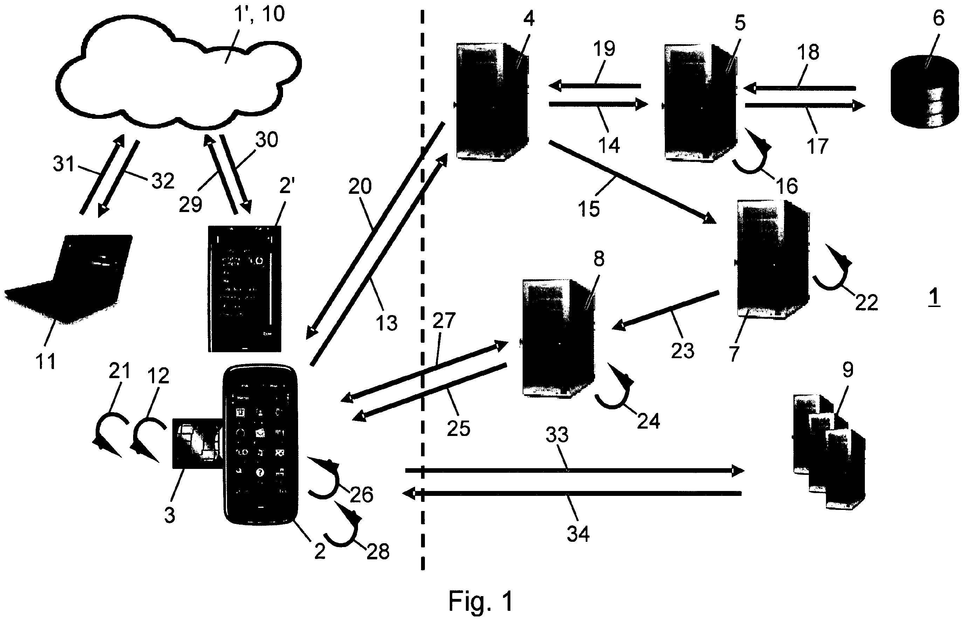

Fig. 1 zeigt in einer schematischen Darstellung die an einer erfindungsgemäßen, zumindest teilautomatischen Konfiguration eines in einem Mobilfunknetz 1 mit einem Mobilfunkteilnehmeridentifikationsmodul 3 - nachfolgend auch SIM genannt - betreibbaren mobilen Endgerätes 2, insbesondere gemäß einem GSM-, GPRS-, UMTS- und/oder LTE-Funknetzstandard, beteiligten Einrichtungen und/oder Komponenten des Mobilfunknetzes 1 sowie die dabei ausgeführten bzw. durchgeführten Verfahrensschritte.

Das mobile Endgerät 2 ist vorliegend beispielhaft als Mobilfunktelefon 2 ausgebildet. Als mobiles Endgerät 2, auch Mobile Terminal (MT) oder User Equipment (UE) bezeichnet, sind ferner auch sogenannte Tablets, oder beispielsweise Module in sogenannten Netbooks oder dergleichen verwendbar. Das Mobilfunkteilnehmeridentifikationsmodul 3 ist vorliegend kartenförmig ausgebildet. Zum Betrieb des mobilen Endgerätes 2 im Mobilfunknetz 1 wird das kartenförmige Mobilfunkteilnehmeridentifikationsmodul 3 in das mobile Endgerät 2 eingesetzt. Anschließend wird das mobile Endgerät 2 durch Einschalten gestartet. Nach dem Starten wird das mobile Endgerät 2 mit dem Mobilfunkteilnehmeridentifikationsmodul 3 im Mobilfunknetz 1 registriert bzw. eingebucht.

Bei bzw. mit dem vorzugsweise ersten Registrieren bzw. Einbuchen des mobilen Endgerätes 2 mit dem Mobilfunkteilnehmeridentifikationsmodul 3 im Mobilfunknetz 1 wird auf dem Mobilfunkteilnehmeridentifikationsmodul 3 eine Anwendung, vorliegend eine sogenannte SIM Tool Kit Application, ausgeführt (in Fig. 1 durch den mit dem Bezugszeichen 12 gekennzeichneten Pfeil symbolisch dargestellt). Im Rahmen der Ausführung der Anwendung (SIM Tool Kit Application) werden vorzugsweise automatisch das Mobilfunkteilnehmeridentifikationsmodul 3 identifizierende Daten, vorliegend die IMSI und die MSISDN, und das mobile Endgerät 2 identifizierende Daten, vorliegend die IMEI, als Kurznachricht (SMS) mittels eines Kurznachrichtendienstes (SMS) des Mobilfunknetzes 1 an ein Empfangsmodul einer Konfigurationseinrichtung des Mobilfunknetzes 1 gesendet (in Fig. 1 durch den mit den Bezugszeichen 13 gekennzeichneten Pfeil symbolisch dargestellt). Das Empfangsmodul der Konfigurationseinrichtung des Mobilfunknetzes 1 ist vorliegend ein zur Weiterleitung und/oder Speicherung von Kurznachrichten (SMS) ausgebildetes und/oder eingerichtetes Netzwerkelement 4, vorliegend ein SMSC, des Mobilfunknetzes 1. Bei der von dem Mobilfunkteilnehmeridentifikationsmodul 3 an das Netzwerkelement (SMSC) 4 des Mobilfunknetzes 1 gesendeten Kurznachricht (SMS) handelt es sich um eine sogenannte SIM OTA SMS. Der Inhalt einer solchen SIM OTA SMS ist in der ETSI TS 102226 "Remote APDU" Structure for UICC based Applications" näher spezifiziert.

Das als Empfangsmodul der Konfigurationseinrichtung des Mobilfunknetzes 1 verwendete Netzwerkelement (SMSC) 4 des Mobilfunknetzes 1 wertet bei Empfang einer Kurznachricht (SMS) verschiedene Parameter der Kurznachricht (SMS) aus. Anhand des sogenannten Protocol Identifiers (PID), welcher in der ETSI TS 100901 näher spezifiziert ist, erkennt das Netzwerkelement (SMSC) 4 des Mobilfunknetzes 1 unter anderem, ob es sich bei der Kurzmitteilung (SMS) um eine reine Text-SMS, welche 160 Zeichen aufweist, oder um eine SIM OTA SMS, welche 140 Byte aufweist, handelt. Mit Hilfe des sogenannten Data Coding Schemes, welches insbesondere in der ETSI TS 100900 näher spezifiziert ist, erkennt das Netzwerkelement (SMSC) 4 des Mobilfunknetzes 1, welcher Kurznachrichtenklasse (Message Class) die Kurznachricht (SMS) angehört.

Bei Empfang der das Mobilfunkteilnehmeridentifikationsmodul 3 identifizierenden Daten (IMSI, MSISDN) und das mobile Endgerät 2 identifizierende Daten (IMEI) enthaltenden Kurznachricht (SMS) seitens des Empfangsmodules der Konfigurationseinrichtung des Mobilfunknetzes 1, vorliegend also seitens des zur Weiterleitung und/oder Speicherung von Kurznachrichten (SMS) ausgebildeten und/oder eingerichteten Netzwerkelements (SMSC) 4 des Mobilfunknetzes 1, wird die empfangene, das Mobilfunkteilnehmeridentifikationsmodul 3 identifizierende Daten (IMSI, MSISDN) und das mobile Endgerät 2 identifizierende Daten (IMEI) enthaltende Kurznachricht (SMS) von dem zur Weiterleitung und/oder Speicherung von Kurznachrichten (SMS) ausgebildeten und/oder eingerichteten Netzwerkelement (SMSC) 4 des Mobilfunknetzes 1 an ein erstes Prüfmodul der Konfigurationseinrichtung des Mobilfunknetzes 1 weitergeleitet (in Fig. 1 durch den mit den Bezugszeichen 14 gekennzeichneten Pfeil symbolisch dargestellt). Das erste Prüfmodul weist dazu vorliegend eine zur Konfiguration von Mobilfunknetzbetreiber-spezifischen Funktionen, Anwendungen und/oder Diensten von mobilen Endgeräten und/oder von Mobilfunkteilnehmeridentifikationsmodulen im Mobilfunknetz 1 ausgebildete und/oder eingerichtete Recheneinrichtung 5, vorliegend einen sogenannten SIM OTA Server, auf.

Ferner wird die seitens des Empfangsmodules der Konfigurationseinrichtung des Mobilfunknetzes 1 empfangene, das Mobilfunkteilnehmeridentifikationsmodul 3 identifizierende Daten (IMSI, MSISDN) und das mobile Endgerät identifizierende Daten (IMEI) enthaltende Kurznachricht (SMS) von dem Empfangsmodul, vorliegend also von dem zur Weiterleitung und/oder Speicherung von Kurznachrichten (SMS) ausgebildeten und/oder eingerichteten Netzwerkelement (SMSC) 4 des Mobilfunknetzes 1, an eine zur Bestimmung des Typs von mobilen Endgeräten ausgebildete und/oder eingerichtete Recheneinrichtung 7, vorliegend einem sogenannten Device Checker, des Mobilfunknetzes 1 weitergeleitet (in Fig. 1 durch den mit dem Bezugszeichen 15 gekennzeichneten Pfeil symbolisch dargestellt). Die Recheneinrichtung (Device Checker) 7 ist dabei Bestandteil des zweiten Prüfmoduls der Konfigurationseinrichtung des Mobilfunknetzes 1.

Das Netzwerkelement (SMSC) 4 des Mobilfunknetzes 1 ist vorliegend vorteilhafterweise derart ausgebildet und/oder eingerichtet, dass dieses Kurznachrichten (SMS) gemäß dem Funknetzstandard des Mobilfunknetzes verarbeiten kann. Um eine Weiterleitung der seitens des Netzwerkelements (SMSC) 4 des Mobilfunknetzes 1 von dem Mobilfunkteilnehmeridentifikationsmodul 3 des mobilen Endgerätes 2 empfangenen Kurznachricht, vorliegend also der SIM OTA SMS, an die zur Konfiguration von Mobilfunknetzbetreiber-spezifischen Funktionen, Anwendungen und/oder Diensten von mobilen Endgeräten und/oder von Mobilfunkteilnehmeridentifikationsmodulen im Mobilfunknetz 1 ausgebildete und/oder eingerichtete Recheneinrichtung (SIM OTA Server) 5 des Mobilfunknetzes 1 und an die zur Bestimmung des Typs von mobilen Endgeräten ausgebildete und/oder eingerichtete Recheneinrichtung (Device Checker) 7 des Mobilfunknetzes 1 zu ermöglichen, ist das Netzwerkelement (SMSC) 4 des Mobilfunknetzes 1 vorliegend gegenüber den gemäß dem Funknetzstandard eines Mobilfunknetzes genügenden standardisierten Netzwerkelementen (SMSC) eines Mobilfunknetzes vorteilhafterweise verändert, ohne dass die gemäß Funknetzstandard eines Mobilfunknetzes standardisierten Funktionen beeinträchtigt sind. So müssen vorteilhafterweise seitens eines Mobilfunknetzes 1 zur Realisierung der vorliegenden Erfindung keine neuen Netzwerkelemente (SMSC) 4 eingerichtet bzw. ausgebildet werden.

Bei Empfang der weitergeleiteten, das Mobilfunkteilnehmeridentifikationsmodul (SIM) 3 identifizierende Daten (IMSI, MSISDN) und das mobile Endgerät 2 identifizierende Daten (IMEI) enthaltenden Kurznachricht (SIM OTA SMS) seitens der zur Konfiguration von Mobilfunknetzbetreiber-spezifischen Funktionen, Anwendungen und/oder Diensten von mobilen Endgeräten und/oder Mobilfunkteilnehmeridentifikationsmodulen (SIM) 3 im Mobilfunknetz 1 ausgebildeten und/oder eingerichteten Recheneinrichtung (SIM OTA Server) 5 des Mobilfunknetzes 1 werden von dieser zur Konfiguration von Mobilfunknetzbetreiber-spezifischen Funktionen, Anwendungen und/oder Diensten von mobilen Endgeräten und/oder Mobilfunkteilnehmeridentifikationsmodulen im Mobilfunknetz 1 ausgebildeten und/oder eingerichteten Recheneinrichtung (SIM OTA Server) 5 des Mobilfunknetzes 1 aus der weitergeleiteten, das Mobilfunkteilnehmeridentifikationsmodul (SIM) 3 identifizierende Daten (IMSI, MSISDN) und das mobile Endgerät 2 identifizierende Daten (IMEI) enthaltenden Kurznachricht (SIM OTA SMS) die das Mobilfunkteilnehmeridentifikationsmodul (SIM) 3 identifizierenden Daten (IMSI, MSISDN) ermittelt (in Fig. 1 durch den mit dem Bezugszeichen 16 gekennzeichneten Pfeil symbolisch dargestellt). Mit den dabei ermittelten, das Mobilfunkteilnehmeridentifikationsmodul (SIM) 3 identifizierenden Daten (IMSI, MSISDN) erfolgt dann eine Abfrage einer Datenbank 6 des Mobilfunknetzes 1. In der Datenbank 6 des Mobilfunknetzes 1 werden dabei Mobilfunknetzbetreiber-spezifische Daten über Funktionen, Anwendungen und/oder Dienste des Mobilfunknetzes 1, welche für Mobilfunkteilnehmeridentifikationsmodule jeweils seitens des Mobilfunknetzes 1 vorgesehen bzw. eingerichtet sind, verwaltet. Die Datenbank 6 des Mobilfunknetzes 1 genügt und verwendet dabei als Anwendungsprotokoll ein sogenanntes Light Weight Directory Access Protocol (LDAP). Die Recheneinrichtung (SIM OTA Server) 5 und die Datenbank 6 sind dabei vorliegend Bestandteil des ersten Prüfmoduls der Konfigurationseinrichtung des Mobilfunknetzes 1.

Auf Basis der Daten in der Antwort auf die Abfrage (in Fig. 1 durch den mit den Bezugszeichen 17 gekennzeichneten Pfeil symbolisch dargestellt) der Datenbank 6 des Mobilfunknetzes 1 (in Fig. 1 durch den mit dem Bezugszeichen 18 gekennzeichneten Pfeil symbolisch dargestellt) werden dann Mobilfunknetzbetreiber-spezifische Daten der für das Mobilfunkteilnehmeridentifikationsmodul (SIM) 3 seitens des Mobilfunknetzes 1 vorgesehenen bzw. eingerichteten Funktionen, Anwendungen und/oder Dienste des Mobilfunknetzes 1 als Kurznachricht mittels eines Kurznachrichtendienstes (SMS) des Mobilfunknetzes 1 über das zur Weiterleitung und/oder Speicherung von Kurznachrichten ausgebildete und/oder eingerichtete Netzwerkelement (SMSC) 4 des Mobilfunknetzes 1 an das Mobilfunkteilnehmeridentifikationsmodul (SIM) 3 gesendet (in Fig. 1 symbolisch durch die mit den Bezugszeichen 19 und den Bezugszeichen 20 gekennzeichneten Pfeile symbolisch dargestellt). Bei der Kurznachricht handelt es sich dabei um eine SMS gemäß den SIM OTA Standard. Entsprechend der Daten in der Antwort auf die Abfrage der Datenbank 6 des Mobilfunknetzes 1 sendet die Recheneinrichtung (SIM OTA Server) 5 über das Netzwerkelement (SMSC) 4 das Betreiberlogo des Mobilfunknetzbetreibers - im Falle eines sogenannten MVNOs (Mobile Virtual Network Operator) oder eines Großkunden, zu bzw. für deren Mobilfunkteilnehmeridentifikationsmodule mit unter ein eigenes Betreiberlogo bereit steht, dementsprechend dieses Betreiberlogo-, Standard-SIM-Telefonbucheinträge und sogenannte PLMN-Listen (PLMN: Public Land Mobile Network) mittels Kurznachrichtendienst (SMS) an das Mobilfunkteilnehmeridentifikationsmodul (SIM) 3. Die Kurzmitteilung (SMS) ist dabei vorteilhafterweise eine für den Nutzer des mobilen Endgerätes 2 nicht sichtbare Kurzmitteilung gemäß dem SIM OTA Standard, also eine sogenannte SIM OTA SMS.

Bei Empfang der Kurznachricht (SIM OTA SMS) mit Mobilfunknetzbetreiber-spezifischen Daten der für das Mobilfunkteilnehmeridentifikationsmodul (SIM) 3 seitens des Mobilfunknetzes 1 vorgesehenen bzw. eingerichteten Funktionen, Anwendungen und/oder Diensten des Mobilfunknetzes 1 seitens des Mobilfunkteilnehmeridentifikationsmoduls (SIM) 3 wird dann eine Anwendung auf dem Mobilfunkteilnehmeridentifikationsmodul (SIM) 3 ausgeführt. Bei der Anwendung handelt es sich vorliegend um eine sogenannte SIM Tool Kit Application. Im Rahmen der Ausführung der Anwendung (SIM Tool Kit Application) werden die Mobilfunknetzbetreiber-spezifischen Daten der für das Mobilfunkteilnehmeridentifikationsmodul (SIM) 3 seitens des Mobilfunknetzes 1 vorgesehenen bzw. eingerichteten Funktionen, Anwendungen und/oder Dienste des Mobilfunknetzes 1 seitens des Mobilfunkteilnehmeridentifikationsmoduls (SIM) 3 vorzugsweise automatisch installiert bzw. eingerichtet (in Fig. 1 symbolisch durch den mit dem Bezugszeichen 21 gekennzeichneten Pfeil dargestellt).

Bei Empfang der weitergeleiteten, das Mobilfunkteilnehmeridentifikationsmodul (SIM) 3 identifizierende Daten (IMSI, MSISDN) und das mobile Endgerät 2 identifizierende Daten (IMEI) enthaltenden Kurznachricht (SIM OTA SMS) seitens des zweiten Prüfmoduls der Konfigurationseinrichtung des Mobilfunknetzes 1, vorliegend seitens der zur Bestimmung des Typs von mobilen Endgeräten ausgebildeten und/oder eingerichteten Recheneinrichtung (Device Checker) 7 des Mobilfunknetzes 1 werden von dieser zur Bestimmung des Typs von mobilen Endgeräten ausgebildeten und/oder eingerichteten Recheneinrichtung (Device Checker) 7 des Mobilfunknetzes 1 aus der weitergeleiteten, das Mobilfunkteilnehmeridentifikationsmodul (SIM) 3 identifizierende Daten (IMSI, MSISDN) und das mobile Endgerät 2 identifizierende Daten (IMEI) enthaltenden Kurznachricht (SIM OTA SMS) die das mobile Endgerät 2 identifizierenden Daten (IMEI) und die das Mobilfunkteilnehmeridentifikationsmodul (SIM) 3 identifizierenden Daten (IMSI, MSISDN) ermittelt (in Fig. 1 durch den mit den Bezugszeichen 22 gekennzeichneten Pfeil symbolisch dargestellt). Die ermittelten, das mobile Endgerät 2 identifizierenden Daten (IMEI) und die das Mobilfunkteilnehmeridentifikationsmodul (SIM) 3 identifizierenden Daten (IMSI, MSISDN) werden dann von der Recheneinrichtung (Device Checker) 7 an eine zur Verwaltung von mobilen Endgeräten ausgebildete und/oder eingerichtete Recheneinrichtung 8, vorliegend einem sogenannten Device Management Server, des Mobilfunknetzes 1 übergeben (in Fig. 1 durch den mit dem Bezugszeichen 23 gekennzeichneten Pfeil symbolisch dargestellt). Die zur Verwaltung von mobilen Endgeräten ausgebildete und/oder eingerichtete Recheneinrichtung (Device Management Server) 8 des Mobilfunknetzes 1 gehört dabei vorliegend vorteilhafterweise zu einem sogenannten Device Management System, welche eine Recheneinrichtung zur Realisierung eines sogenannten Device Management Services und eine Recheneinrichtung für entsprechende Server-Dienste umfasst. Bei dem in Fig. 1 dargestellten Ausführungsbeispiel sind die den Device Management Service realisierende Recheneinrichtung und der Device Management-Server, welche vorliegend beide Bestandteil des zweiten Prüfmoduls der Konfigurationseinrichtung des Mobilfunknetzes 1 sind, exemplarisch in einer einzelnen Recheneinrichtung 8 dargestellt.

Anhand der übergebenen, das mobile Endgerät 2 identifizierenden Daten (IMEI) ermittelt die zur Verwaltung von mobilen Endgeräten ausgebildete und/oder eingerichtete Recheneinrichtung (Device Management Server) 8 des Mobilfunknetzes 1 dann den Typ des mobilen Endgerätes 2 (in Fig. 1 durch den mit dem Bezugszeichen 24 gekennzeichneten Pfeil symbolisch dargestellt). Ferner wird von der zur Verwaltung von mobilen Endgeräten 2 ausgebildeten und/oder eingerichteten Recheneinrichtung (Device Management Server) 8 des Mobilfunknetzes 1 mittels eines Kurznachrichtendienstes (SMS) des Mobilfunknetzes 1 eine Kurznachricht mit Daten zum Aufbau einer über das Mobilfunknetz 1 erfolgenden Kommunikationsverbindung (Session) 27 zwischen dem mobilen Endgerät 2 und einer Recheneinrichtung (Device Management Server) 8 des Mobilfunknetzes 1 an das mobile Endgerät 2 gesendet (in Fig. 1 durch den mit dem Bezugszeichen 25 gekennzeichneten Pfeil symbolisch dargestellt). Bei der Kurznachricht handelt es sich dabei um eine sogenannte Bootstrap SMS mit Daten, sogenannten Settings, zum Aufbau der über das Mobilfunknetz 1 erfolgenden Kommunikationsverbindung (Session) 27 zwischen dem mobilen Endgerät 2 und der Recheneinrichtung (Device Management Server) 8 des Mobilfunknetzes 1. Die Recheneinrichtung (Device Management Server) 8 des Mobilfunknetzes 1 ist dabei ausgebildet und/oder eingerichtet, Endgeräte-spezifische Daten für von mobilen Endgeräten unterstützte Funktionen, Anwendungen und/oder Dienste zu verwalten. Wie bereits erläutert ist vorliegend die in Fig. 1 dargestellte Recheneinrichtung 8 ausgebildet und/oder eingerichtet eine Verwaltung von mobilen Endgeräten und gleichzeitig eine Verwaltung von Endgeräte-spezifischen Daten für von mobilen Endgeräten unterstützte Funktionen, Anwendungen und/oder Dienste zu realisieren. Die Bootstrap SMS enthält vorliegend die Settings für einen sogenannten Device Management Client des mobilen Endgerätes 2. Die Bootstrap Settings beinhalten dabei unter anderem Adressierungsdaten wie die sogenannte URL der Recheneinrichtung (Device Management Server) 8, APN, und Proxy zur Adressierung der Recheneinrichtung (Device Management Server) 8 des Mobilfunknetzes 1 und Authentisierungsdaten, mit Hilfe derer sich das mobile Endgerät 2 bei der Recheneinrichtung (Device Management Server) 8 erfolgreich authentisieren kann. Die Bootstrap SMS und/oder die Authentisierungsdaten genügen dabei dem sogenannten OMA Device Management Standard.

Bei Empfang der Daten (Settings) zum Aufbau einer über das Mobilfunknetz 1 erfolgenden Kommunikationsverbindung (Session) 27 zwischen dem mobilen Endgerät 2 und der Recheneinrichtung (Device Management Server) 8 des Mobilfunknetzes 1 enthaltenden Kurznachricht (Bootstrap SMS) seitens des mobilen Endgerätes 2 werden von dem mobilen Endgerät 2 aus dieser Kurznachricht (Bootstrap SMS) die Daten (Settings) zum Aufbau einer über das Mobilfunknetz 1 erfolgenden Kommunikationsverbindung (Session) 27 zwischen dem mobilen Endgerät 2 und der Recheneinrichtung (Device Management Server) 8 des Mobilfunknetzes 1 ermittelt. Ferner werden diese ermittelten Daten (Settings) zum Aufbau einer über das Mobilfunknetz 1 erfolgenden Kommunikationsverbindung (Session) 27 zwischen dem mobilen Endgerät 2 und der Recheneinrichtung (Device Management Server) 8 des Mobilfunknetzes 1 seitens des mobilen Endgerätes 2 vorzugsweise automatisch installiert bzw. eingerichtet. Die Ermittlung und Installation bzw. Einrichtung sind bei dem in Fig. 1 dargestellten Ausführungsbeispiel durch den mit dem Bezugszeichen 26 gekennzeichneten Pfeil symbolisch dargestellt. Anschließend wird vorzugsweise automatisch eine entsprechende Kommunikationsverbindung (Session) 27 zwischen dem mobilen Endgerät 2 und der Recheneinrichtung (Device Management Server) 8 des Mobilfunknetzes 1 aufgebaut (in Fig. 1 durch den mit dem Bezugszeichen 27 gekennzeichneten Doppelpfeil symbolisch dargestellt).

Im Rahmen der zwischen dem mobilen Endgerät 2 und der Recheneinrichtung (Device Management Server) 8 des Mobilfunknetzes 1 aufgebauten Kommunikationsverbindung (Session) 27 werden von der Recheneinrichtung (Device Management Server) 8 des Mobilfunknetzes 1 aus dem mobilen Endgerät 2 Daten über von dem mobilen Endgerät 2 unterstützte Funktionen, Anwendungen und/oder Dienste ausgelesen. Anhand dieser von der Recheneinrichtung (Device Management Server) 8 des Mobilfunknetzes 1 ausgelesenen Daten über von dem mobilen Endgerät 2 unterstützte Funktionen, Anwendungen und/oder Dienste werden von der Recheneinrichtung (Device Management Server) 8 die von dem mobilen Endgerät 2 unterstützten Funktionen, Anwendungen und/oder Dienste ermittelt. Die Recheneinrichtung (Device Management Server) 8 liest dabei vorteilhafterweise sogenannte Device Details sowie den sogenannten Device Management Tree (DM-Tree) des mobilen Endgerätes 2 aus und ermittelt so, welche Funktionen, Anwendungen und/oder Dienste das mobile Endgerät 2 unterstützt bzw. unterstützen kann. Anschließend werden Endgerät-spezifische Daten für die entsprechend ermittelten, von dem mobilen Endgerät 2 unterstützten Funktionen, Anwendungen und/oder Dienste von der Recheneinrichtung (Device Management Server) 8 des Mobilfunknetzes 1 über die aufgebaute Kommunikationsverbindung (Session) 27 zwischen dem mobilen Endgerät 2 und der Recheneinrichtung (Device Management Server) 8 an das mobile Endgerät 2 übermittelt. Bei Empfang der Endgerät-spezifischen Daten seitens des mobilen Endgerätes 2 werden diese Daten vorzugsweise automatisch seitens des mobilen Endgerätes 2 installiert bzw. eingerichtet (in Fig. 1 symbolisch durch den mit dem Bezugszeichen 28 gekennzeichnet Pfeil symbolisch dargestellt). Dies alles geschieht vorteilhafterweise im Hintergrund, vom Nutzer des mobilen Endgerätes 2 lediglich bemerkbar durch eine aktive Kommunikations- bzw. Datenverbindung zwischen dem mobilen Endgerät 2 und der Recheneinrichtung (Device Management Server) 8 des Mobilfunknetzes 1.

Von nun an kann der Nutzer des mobilen Endgerätes 2 alle von seinem mobilen Endgerät 2 unterstützten Dienste des Mobilfunknetzbetreibers (sogenannte Operator Services), insbesondere WAP, Internet, MMS und/oder dergleichen nutzen. Die von dem Mobilfunknetzbetreiber angebotenen (Operator Services) werden dabei von diversen Recheneinrichtungen des Mobilfunknetzes 1 realisiert. Diese Recheneinrichtungen sind in dem in Fig. 1 dargestellten Ausführungsbeispiel symbolisch mit dem Bezugszeichen 9 gekennzeichnet. Entsprechende Kommunikationsverbindungen zwischen dem mobilen Endgerät 2 und/oder dem Mobilfunkteilnehmeridentifikationsmodul (SIM) 3 zur Nutzung der von dem mobilen Endgerät 2 unterstützten Operator Services sind in Fig. 1 durch die mit den Bezugszeichen 33 und 34 gekennzeichneten Pfeile symbolisch dargestellt. Unterstützt das mobile Endgerät beispielsweise MS Mail for Exchange, so wird dieser Exchange Client des mobilen Endgerätes 3 ebenfalls automatisch als bzw. mit einem Operator Service konfiguriert. Nach Eingabe des Exchange-Passwortes, welches vorliegend aus Sicherheitsgründen vorteilhafterweise von dem Nutzer manuell seitens des mobilen Endgerätes 2 eingegeben wird, werden dem Nutzer des mobilen Endgerätes 2 dann automatisch als Teilnehmer-spezifische Daten Emails, Kontaktdaten, Termine, Aufgaben, Notizen und/oder dergleichen bereitgestellt.

Nach der Installation bzw. Einrichtung von Endgerät-spezifischen Daten für von dem mobilen Endgerät 2 unterstützte Funktionen, Anwendungen und/oder Dienste seitens des mobilen Endgerätes 2 erfolgt, vorzugsweise automatisch, eine Synchronisierung von Teilnehmer-spezifischen Daten, insbesondere Emails, Kontaktdaten, Termine, Aufgaben und/oder Notizen des Nutzers des mobilen Endgerätes 2, für bzw. von Funktionen, Anwendungen und/oder Diensten des mobilen Endgerätes 2. Dabei werden entsprechende Teilnehmer-spezifische Daten für bzw. von Funktionen, Anwendungen und/oder Diensten des mobilen Endgerätes 2 in einer Datenbank 10 des Mobilfunknetzes 1 verwaltet. Die Datenbank 10 des Mobilfunknetzes 1 ist dabei über das Mobilfunknetz 1 zugänglich. Bei dem in Fig. 1 dargestellten Ausführungsbeispiel ist die Datenbank 10 des Mobilfunknetzes 1 bzw. der Zugang zu der Datenbank 10 des Mobilfunknetzes 1 symbolisch durch eine Wolke 1' dargestellt. Die Teilnehmer-spezifischen Daten in der Datenbank (Cloud) 10 des Mobilfunknetzes 1 sind dabei von dem Nutzer des mobilen Endgerätes 2 entweder über eine Recheneinrichtung 11, vorliegend einem Notebook, über eine Internet-Verbindung (in Fig. 1 durch die mit den Bezugszeichen 31 und 32 gekennzeichneten Pfeile symbolisch dargestellt) zu einem vorherigen oder nachfolgenden Zeitpunkt administrierbar, insbesondere zur Synchronisierung. Ferner ist die Datenbank (Cloud) 10 des Mobilfunknetzes 1 über eine über das Mobilfunknetz 1 erfolgende Kommunikationsverbindung (in Fig. 1 durch die mit den Bezugszeichen 29 und 30 gekennzeichneten Pfeile symbolisch dargestellt) zwischen dem mobilen Endgerät 2 und der Datenbank (Cloud) 10 administrierbar, insbesondere zur Synchronisierung. Der Schritt der Synchronisierung von Teilnehmer- bzw. Nutzer-spezifischen Daten muss dabei nicht zwangsläufig erst nach der Einrichtung von Endgerät-spezifischen Daten erfolgen. Der Smart Card Web Server, über den die Synchronisierung mit der Web Cloud erfolgt, kann entweder bereits vorkonfiguriert sein, so dass es möglich ist über diesen Smart Card Web Server durch Öffnen eines Kommunikationskanals via BIP (BIP: Bearer Independent Protocol) direkt auf die Cloud zuzugreifen, ohne dass zuvor ein Browser des Endgerätes via OMA CP provisioniert wurde. Oder, wenn der Smart Card Web Server nicht bereits vorkonfiguriert ist, kann dieser mittels SIM OTA mit Konfigurationsdaten provisioniert werden.

Zur Synchronisierung von Teilnehmer-spezifischen Daten mittels des mobilen Endgerätes 2 ist auf dem Mobilfunkteilnehmeridentifikationsmodul (SIM) 3 vorteilhafterweise eine Anwendung (SIM Tool Kit Application) vorgesehen, welche vorzugsweise automatisch ausgeführt wird. Die Anwendung (SIM Tool Kit Application) ist dabei vorliegend ein Smartcard Webserver, welcher als Anwendung (SIM Application) vorliegend einen SyncML Client gemäß dem OMA-Data-Synchronisation-Standard aufweist. Die Ausführung der Anwendung (SIM Application) seitens des mobilen Endgerätes 2 ist in Fig. 1 symbolisch durch das mit dem Bezugszeichen 2' gekennzeichnete mobile Endgerät dargestellt, welches beispielhaft einen auf dem Mobilfunkteilnehmeridentifikationsmodul 3 des mobilen Endgerätes 2 ausgeführten Smart Card Web Server zeigt.

Weitere Einzelheiten, Merkmale und Vorteile bei der erfindungsgemäßen zumindest teilautomatischen Konfiguration eines in einem Mobilfunknetz 1 mit einem Mobilfunkteilnehmeridentifikationsmodul (SIM) 3 betreibbaren mobilen Endgerätes 2 werden nachfolgend anhand eines Anwendungsszenarios beispielhaft dargestellt:
Ein Nutzer bzw. Teilnehmer eines Mobilfunknetzes hat ein neues mobiles Endgerät erworben oder hat von seinem Mobilfunknetzbetreiber, beispielsweise im Rahmen einer Vertragsverlängerung, ein neues mobiles Endgerät erhalten, und/oder hat seinen Mobilfunknetzbetreiber gewechselt. Der Nutzer bzw. Teilnehmer setzt nun das von seinem Mobilfunknetzbetreiber erhaltene Mobilfunkteilnehmeridentifikationsmodul (SIM) in das mobile Endgerät ein. Anschließend wird das mobile Endgerät eingeschaltet. Das mobile Endgerät bootet und die dem Teilnehmer bzw. Nutzer vertraute Menüstruktur zur Bedienung bzw. Handhabung des mobilen Endgerätes bzw. der mit diesem nutzbaren Funktionen, Anwendungen und/oder Dienste wird angezeigt bzw. wiedergegeben. Alle dem Nutzer bzw. Teilnehmer vertrauten Funktionen, Anwendungen und Dienste des Mobilfunknetzes sind automatisch vorhanden. Sämtliche Kontakte des Nutzers bzw. Teilnehmers sind bereits auf dem mobilen Endgerät synchronisiert. Die Nachrichten (Messages), Email, Kalendereinträge, Aufgaben, Notizen und/oder dergleichen des Nutzers bzw. Teilnehmers sind wieder vorhanden. Fotos, Musikdateien (beispielsweise MP3's) sowie sämtliche heruntergeladenen Daten sowie private Daten sind wieder verfügbar. Sämtliche anderen Einstellungen, beispielsweise Bookmarks und dergleichen, sind erstellt. Dazu muss der Teilnehmer bzw. Nutzer des mobilen Endgerätes selbst vorteilhafterweise keine beziehungsweise nur minimale Interaktionen vornehmen. Insbesondere braucht der Nutzer bzw. Teilnehmer seine Kontakte nicht mühsam von seinem alten mobilen Endgerät auf sein neues mobiles Endgerät kopieren. Der Nutzer bzw. Teilnehmer muss keine Browser-, MMS- oder Email-Settings einstellen. Der Nutzer bzw. Teilnehmer muss kein Backup oder dergleichen vornehmen. Kommunikationsverbindungen zu einem Rechner (PC), beispielsweise mittels einem Anwendungsprogramm wie PC-Suite, beispielsweise mittels Bluetooth oder dergleichen, müssen nicht eingerichtet und verwendet werden.

Unabhängig vom Typ des mobilen Endgerätes kann vorteilhafterweise mittels des Mobilfunkteilnehmeridentifikationsmoduls (SIM) über den integrierten Browser auf eine Website des Mobilfunknetzbetreibers zugegriffen werden. Der Nutzer bzw. Teilnehmer kann vorzugsweise über HSPA (LTE) und/oder WLAN direkt vom mobilen Endgerät aus über den Smartcard-Webserver auf seine Daten in der Datenbank (Cloud) des Mobilfunknetzbetreibers im Mobilfunknetz zugreifen und über diese verfügen. Die Authentisierung des Zugriffs erfolgt vorteilhafterweise über das Mobilfunkteilnehmeridentifikationsmodul (SIM).

Funktionen, Anwendungen und/oder Dienste des Mobilfunknetzbetreibers stehen dem Nutzer nach dem ersten Einbuchen bzw. Registrieren des Mobilfunkteilnehmeridentifikationsmoduls mit dem mobilen Endgerät innerhalb kürzester Zeit auf dem mobilen Endgerät zur Verfügung.

SIM-Applikationen werden vorteilhafterweise mittels SIM OTA auf das Mobilfunkteilnehmeridentifikationsmoduls (SIM) gebracht und auch von diesem entfernt bzw. deinstalliert. Anwendungen des mobilen Endgerätes, sogenannte Terminal Applikationen, werden dabei vorzugsweise mittels SCOMO auf das mobile Endgerät gebracht bzw. installiert und auch von diesem entfernt bzw. deinstalliert.

Bei Verlust des mobilen Endgerätes stehen dem Nutzer bzw. Teilnehmer nach dem Tausch des Mobilfunkteilnehmeridentifikationsmoduls (SIM) alle Funktionen, Anwendungen und Dienste sowie Daten umgehend wieder zur Verfügung.

Vorteilhafterweise ist eine kundenspezifische Kennzeichnung (Brand) für sogenannte MVNO's oder Großkunden realisierbar. Dabei sind insbesondere das Betreiberlogo, ein sogenanntes SIM-Firmentelefonbuch, PLMN-Listen für kostenlose Roaming-Anwendungen im Netz, insbesondere im globalen Netz des Mobilfunknetzbetreibers, möglich.

Die in der Fig. der Zeichnung dargestellten Ausführungsbeispiele der Erfindung und die im Zusammenhang mit diesen beschriebenen Ausführungsbeispiele und/oder Anwendungsszenarien der Erfindung dienen lediglich der Erläuterung der Erfindung und sind für diese nicht beschränkend.

### Bezugszeichenliste:

- 1, 1': Mobilfunknetz
- 2, 2': mobiles Endgerät
- 3: Mobilfunkteilnehmeridentifikationsmodul/SIM/GUSIM
- 4: Netzwerkelement/SMSC (Empfangsmodul der Konfigurationseinrichtung des Mobilfunknetzes)
- 5: Recheneinrichtung/SIM-OTA-Server (Bestandteil erstes Prüfmodul der Konfigurationseinrichtung des Mobilfunknetzes)
- 6: Datenbank/LDAP (Bestandteil erstes Prüfmodul der Konfigurationseinrichtung des Mobilfunknetzes)
- 7: Recheneinrichtung/Device Checker (Bestandteil zweites Prüfmodul der Konfigurationseinrichtung des Mobilfunknetzes)
- 8: Recheneinrichtung/Device Management Server (Bestandteil zweites Prüfmodul der Konfigurationseinrichtung des Mobilfunknetzes)
- 9: Recheneinrichtung/Betreiber Services (Mobilfunknetz)
- 10: Datenbank/Cloud
- 11: Rechner (PC) mit Internet-Verbindung
- 12: Ausführung Anwendung/SIM Tool Kit Application
- 13: Versenden Kurznachricht (SMS) mit Daten (IMSI, MSISDN und IMEI)
- 14: Weiterleitung Kurznachricht (13) an Recheneinrichtung (5)
- 15: Weiterleitung Kurznachricht (13) an Recheneinrichtung (7)
- 16: Ermittlung Mobilfunkteilnehmeridentifikationsmodul identifizierender Daten (IMSI, MSISDN)
- 17: Abfrage Datenbank (6)
- 18: Antwort Datenbank (6)
- 19: Weiterleitung Antwortdaten
- 20: Weiterleitung Antwortdaten als SMS
- 21: Ausführung Anwendung/SIM Tool Kit Application (Installation Antwortdaten)
- 22: Ermittlung Daten (IMSI, MSISDN und IMEI)
- 23: Übergabe Daten (IMSI, MSISDN und IMEI) an Recheneinrichtung (8)
- 24: Ermittlung des Typs des mobilen Endgerätes (2)
- 25: Kurznachricht (SMS) für Kommunikationsverbindung zwischen Recheneinrichtung (8) und mobilem Endgerät (2)
- 26: Installation der Daten für die Kommunikationsverbindung seitens des mobilen Endgerätes und Aufbau der Kommunikationsverbindung zwischen dem mobilen Endgerät (2) und der Recheneinrichtung (8)
- 27: Kommunikationsverbindung zwischen mobilem Endgerät (2) und Recheneinrichtung (8) (Auslesen Daten über von dem mobilen Endgerät (2) unterstützte Funktionen, Anwendungen und/oder Dienste, Versenden endgerätespezifischer Daten für von dem mobilen Endgerät (2) unterstützte Funktionen, Anwendungen und/oder Dienste)
- 28: Installation bzw. Einrichtung der endgerätspezifischen Daten seitens des mobilen Endgerätes (2)
- 29: Kommunikationsverbindung/Synchronisierung mit Datenbank (10) über das mobile Endgerät (2) oder alternativ via Smart Card Web Server auf dem Mobilfunkteilnehmeridentifikationsmodul (3)
- 30: Kommunikationsverbindung/Synchronisierung mit Datenbank (10) über den Rechner 11 oder alternativ via Smart Card Web Server auf dem Mobilfunkteilnehmeridentifikationsmodul (3)
- 31: Kommunikationsverbindung/Synchronisierung mit Datenbank (10) über den Rechner 11
- 32: Kommunikationsverbindung/Synchronisierung mit Datenbank (10) über den Rechner 11
- 33: Kommunikationsverbindung Nutzung Mobilfunknetzbetreiber-Services
- 34: Kommunikationsverbindung Nutzung Mobilfunknetzbetreiber-Services

## Patentansprüche

1. Verfahren zur zumindest teilautomatischen Konfiguration eines in einem Mobilfunknetz (1) mit einem Mobilfunkteilnehmeridentifikationsmodul, SIM (3), betreibbaren mobilen Endgerätes (2),
insbesondere gemäß einem GSM-, GPRS-, UMTS- und/oder LTE-Funknetzstandard,
nach dem vorzugsweise ersten Registrieren des mobilen Endgerätes (2) mit dem Mobilfunkteilnehmeridentifikationsmodul, SIM (3), im Mobilfunknetz (1), mit folgenden seitens des Mobilfunknetzes (1) ausgeführten Schritten:
a) Empfangen einer Kurznachricht in einem Empfangsmodul, SMSC, einer Konfigurationseinrichtung des Mobilfunknetzes (1),
wobei die Kurznachricht das Mobilfunkteilnehmeridentifikationsmodul, SIM (3), identifizierende Daten und das mobile Endgerät (2) identifizierende Daten enthält;
b) Übertragen der empfangenen Kurznachricht von dem Empfangsmodul, SMSC, an ein erstes Prüfmodul (5) der Konfigurationseinrichtung und an ein zweites Prüfmodul (7, 8) der Konfigurationseinrichtung;
c) Ermitteln von Mobilfunknetzbetreiber-spezifischen Daten für das Mobilfunkteilnehmeridentifikationsmodul, SIM (3), durch das erste Prüfmodul (5) anhand der das Mobilfunkteilnehmeridentifikationsmodul, SIM (3), identifizierenden Daten;
d) Erzeugen eines ersten Konfigurationsdatensatzes durch das erste Prüfmodul (5),
wobei der Konfigurationsdatensatz Mobilfunknetzbetreiber-spezifische Daten für das Mobilfunkteilnehmeridentifikationsmodul, SIM (3), enthält;
e) Ermitteln von Endgeräte-spezifischen Daten für das mobile Endgerät (2) durch das zweite Prüfmodul (7, 8) anhand der das mobile Endgerät (2) identifizierenden Daten;
f) Erzeugen eines zweiten Konfigurationsdatensatzes durch das zweite Prüfmodul (7, 8),
wobei der Konfigurationsdatensatz Endgeräte-spezifische Daten für das mobile Endgerät (2) enthält;
und
g) Senden des ersten Konfigurationsdatensatzes und des zweiten Konfigurationsdatensatzes von der Konfigurationseinrichtung an das mobile Endgerät (2);
**dadurch gekennzeichnet, dass**
der zweite Konfigurationsdatensatz über eine zwischen dem zweiten Prüfmodul (8) und dem mobilen Endgerät (2) als IP-Verbindung aufgebaute Kommunikationsverbindung, Session (27), an das mobile Endgerät (2) gesendet wird, wobei
das zweite Prüfmodul (8) zur Einrichtung der als IP-Verbindung ausgebildeten Kommunikationsverbindung, Session (27), eine für den Nutzer des mobilen Endgerätes (2) nicht sichtbare Kurznachricht an das mobile Endgerät (2) sendet, wobei die Kurznachricht Daten zum Aufbau der als IP-Verbindung ausgebildeten Kommunikationsverbindung, Session (27), enthält, umfassend Adressierungsdaten zur Adressierung einer Endgeräte-spezifischen Daten über von mobilen Endgeräten (2) unterstützte Funktionen, Anwendungen und/oder Dienste verwaltenden Datenbank (8) und/oder Authentisierungsdaten zur Authentisierung des mobilen Endgerätes (2) gegenüber der Endgeräte-spezifischen Daten über von mobilen Endgeräten (2) unterstützte Funktionen, Anwendungen und/oder Dienste verwaltenden Datenbank (8),
das zweite Prüfmodul (7, 8) bei als IP-Verbindung eingerichteter Kommunikationsverbindung, Session (27), aus dem mobilen Endgerät (2) Informationen über von dem mobilen Endgerät (2) unterstützte Funktionen, Anwendungen und/oder Dienste ausliest, mit diesen Informationen die Endgeräte-spezifischen Daten über von dem mobilen Endgerät (2) unterstützte Funktionen, Anwendungen und/oder Dienste aus der Datenbank (8) abfragt, und aus den abgefragten Daten den zweiten Konfigurationsdatensatz erzeugt, und
eine auf dem Mobilfunkteilnehmeridentifikationsmodul, SIM (3), ausgeführte Anwendung ausgebildet und/oder eingerichtet ist, zu erkennen, ob die aktuelle Kombination bzw. Verpaarung des mit dem Mobilfunkteilnehmeridentifikationsmodul, SIM (3), verwendeten mobilen Endgerätes bereits zu einem vorherigen Zeitpunkt genutzt wurde.

2. Verfahren nach Anspruch 1, **dadurch gekennzeichnet, dass** das erste Prüfmodul (5) der Konfigurationseinrichtung Mobilfunknetzbetreiber-spezifische Daten für das Mobilfunkteilnehmeridentifikationsmodul, SIM (3), durch Abfrage einer Datenbank (6) ermittelt, wobei in der Datenbank (6) Mobilfunknetzbetreiber-spezifische Daten über Funktionen, Anwendungen und/oder Dienste des Mobilfunknetzes (1) verwaltet werden, welche für Mobilfunkteilnehmeridentifikationsmodule, SIM (3), seitens des Mobilfunknetzes (1) jeweils vorgesehen bzw. eingerichtet sind.

3. Verfahren nach Anspruch 1 oder Anspruch 2, **dadurch gekennzeichnet, dass** der erste Konfigurationsdatensatz mittels einer Kurznachricht an das mobile Endgerät (2) gesendet wird, vorzugsweise mittels einer für den Nutzer des mobilen Endgerätes (2) nicht sichtbaren Kurznachricht.

4. Verfahren zur zumindest teilautomatischen Konfiguration eines in einem Mobilfunknetz (1) mit einem Mobilfunkteilnehmeridentifikationsmodul, SIM (3), betreibbaren mobilen Endgerätes (2),
insbesondere gemäß einem GSM-, GPRS-, UMTS- und/oder LTE-Funknetzstandard,
nach dem vorzugsweise ersten Registrieren des mobilen Endgerätes (2) mit dem Mobilfunkteilnehmeridentifikationsmodul, SIM (3), im Mobilfunknetz (1), mit folgenden seitens des mobilen Endgerätes (2) bzw. des Mobilfunkteilnehmeridentifikationsmoduls, SIM (3), ausgeführten Schritten:
a) Senden einer Kurznachricht von dem mobilen Endgerät (2) an eine Konfigurationseinrichtung des Mobilfunknetzes (1),
wobei die Kurznachricht das Mobilfunkteilnehmeridentifikationsmodul, SIM (3), identifizierende Daten und das mobile Endgerät (2) identifizierende Daten enthält;
b) Empfang eines ersten Konfigurationsdatensatzes und eines zweiten Konfigurationsdatensatzes durch das mobile Endgerät (2),
wobei der erste Konfigurationsdatensatz Mobilfunknetzbetreiber-spezifische Daten für das Mobilfunkteilnehmeridentifikationsmodul, SIM (3), enthält und der zweite Konfigurationsdatensatz Endgeräte-spezifische Daten für das mobile Endgerät (2) enthält;
c) Installation des ersten Konfigurationsdatensatzes seitens des Mobilfunkteilnehmeridentifikationsmodul, SIM (3);
und
d) Installation des zweiten Konfigurationsdatensatzes seitens des mobilen Endgerätes (2);
**dadurch gekennzeichnet, dass**
der zweite Konfigurationsdatensatz über eine zwischen dem mobilen Endgerät (2) und der Konfigurationseinrichtung des Mobilfunknetzes (1) als IP-Verbindung aufgebaute Kommunikationsverbindung, Session (27), empfangen wird, wobei
das mobile Endgerät (2) zur Einrichtung der als IP-Verbindung ausgebildeten Kommunikationsverbindung, Session (27), eine für den Nutzer des mobilen Endgerätes (2) nicht sichtbare Kurznachricht empfängt, wobei die nicht sichtbare Kurznachricht Daten zum Aufbau der als IP-Verbindung ausgebildeten Kommunikationsverbindung (Session, 27) enthält, umfassend Adressierungsdaten zur Adressierung einer Endgeräte-spezifischen Daten über von mobilen Endgeräten (2) unterstützte Funktionen, Anwendungen und/oder Dienste verwaltenden Datenbank (8) der Konfigurationseinrichtung und/oder Authentisierungsdaten zur Authentisierung des mobilen Endgerätes (2) gegenüber der Endgeräte-spezifischen Daten über von mobilen Endgeräten (2) unterstützte Funktionen, Anwendungen und/oder Dienste verwaltenden Datenbank, (Device Management Server, (8), der Konfigurationseinrichtung, und
eine auf dem Mobilfunkteilnehmeridentifikationsmodul, SIM (3), ausgeführte Anwendung ausgebildet und/oder eingerichtet ist zu erkennen, ob die aktuelle Kombination bzw. Verpaarung des mit dem Mobilfunkteilnehmeridentifikationsmodul, SIM (3), verwendeten mobilen Endgerätes bereits zu einem vorherigen Zeitpunkt genutzt wurde.

5. Verfahren nach Anspruch 4, **dadurch gekennzeichnet, dass** der erste Konfigurationsdatensatz mittels einer Kurznachricht empfangen wird, vorzugsweise mittels einer für den Nutzer des mobilen Endgerätes (2) nicht sichtbaren Kurznachricht.

6. Verfahren nach Anspruch 4 oder Anspruch 5, **dadurch gekennzeichnet, dass** bei bzw. mit dem vorzugsweise ersten Registrieren des mobilen Endgerätes (2) mit dem Mobilfunkteilnehmeridentifikationsmodul, SIM (3), im Mobilfunknetz (1) die Anwendung auf dem Mobilfunkteilnehmeridentifikationsmodul, SIM (3), ausgeführt wird, wobei im Rahmen der Ausführung der Anwendung vorzugsweise automatisch die das Mobilfunkteilnehmeridentifikationsmodul, SIM (3), identifizierende Daten und das mobile Endgerät (2) identifizierende Daten enthaltende Kurznachricht an die Konfigurationseinrichtung des Mobilfunknetzes (1) gesendet wird.

7. Verfahren nach Anspruch 6, **dadurch gekennzeichnet, dass** die Anwendung auf dem Mobilfunkteilnehmeridentifikationsmodul, SIM (3), ausgebildet und/oder eingerichtet ist, wenigstens zwei zuletzt genutzte Kombinationen bzw. Verpaarungen von mit dem Mobilfunkteilnehmeridentifikationsmodul, SIM (3), verwendeten mobilen Endgeräten zu erfassen und seitens des Mobilfunkteilnehmeridentifikationsmoduls, SIM (3), zu speichern, wobei vorzugsweise die das jeweilige mobile Endgerät identifizierenden Daten den das Mobilfunkteilnehmeridentifikationsmodul, SIM (3), identifizierenden Daten zugeordnet werden.

8. Verfahren nach Anspruch 4, **dadurch gekennzeichnet, dass** die Anwendung auf dem Mobilfunkteilnehmeridentifikationsmodul, SIM (3), einen Vergleich der aktuell genutzten Kombination bzw. Verpaarung mit wenigstens einer zuvor gespeicherten Kombination bzw. Verpaarung durchführt, und bejahendenfalls keine Konfiguration erfolgt.

## Claims

1. A method for the at least partially automatic configuration of a mobile terminal (2) that is operable with a mobile subscriber identification module, SIM (3), in a mobile radio network (1),
in particular according to a GSM, GPRS, UMTS and/or LTE radio network standard,
after the preferably first registration of the mobile terminal (2) with the mobile subscriber identification module, SIM (3), in the mobile radio network (1), comprising the following steps carried out by the mobile radio network (1):
a) receiving a short message in a reception module, SMSC, of a configuration device of the mobile radio network (1),
wherein the short message contains data which identify the mobile subscriber identification module, SIM (3), and data which identify the mobile terminal (2);
b) transmitting the received short message from the reception module, SMSC, to a first test module (5) of the configuration device and to a second test module (7, 8) of the configuration device;
c) determining mobile network operator specific data for the mobile subscriber identification module, SIM (3), by means of the first test module (5) on the base of the data which identify the mobile subscriber identification module, SIM (3);
d) generating a first configuration data set by the first test module (5),
wherein the configuration data set contains mobile network operator specific data for the mobile subscriber identification module, SIM (3);
e) determining terminal specific data for the mobile terminal (2) by the second test module (7, 8) on the base of the data which identify the mobile terminal (2);
f) generating a second configuration data set by the second test module (7, 8),
wherein the configuration data set contains terminal specific data for the mobile terminal (2);
and
g) sending the first configuration data set and the second configuration data set from the configuration device to the mobile terminal (2);
**characterized in that**
the second configuration data set will be sent to the mobile terminal (2) via a communication connection, session (27), established as ip connection between the second test module (8) and the mobile terminal (2), wherein
the second test module (8) will send a short message to the mobile terminal (2), which short message is not visible for the user of the mobile terminal (2), for establishing the communication connection configured as ip connection, wherein the short message contains data for establishing the communication connection, session (27), configured as ip connection, comprising addressing data for addressing a database (8) which manages terminal specific data about functions, applications and/or services supported by mobile terminals (2) and/or authentication data for authenticating the mobile terminal (2) with respect to the database (8) which manages terminal specific data about functions, applications and/or services supported by mobile terminals (2),
if the communication connection, session (27), configured as ip connection is established, the second test module (7, 8) will read information about functions, applications and/or services supported by the mobile terminal (2) out of the mobile terminal (2), on the base of this information the module will query the terminal specific data about functions, applications and/or services supported by the mobile terminal (2) from the database (8) and will generate the second configuration data set on the base of the queried data, and
an application carried out on the mobile subscriber identification module, SIM (3), is configured and/or adapted to determine whether the actual combination or mating of the mobile terminal used with the mobile subscriber identification module, SIM (3), has already been used at a former time.

2. A method according to claim 1, **characterized in that** the first test module (5) of the configuration device will determine mobile network operator specific data for the mobile subscriber identification module, SIM (3), by querying a database (8), wherein mobile network operator specific data about functions, applications and/or services of the mobile radio network (1) are managed in the database (6), which functions, applications and/or services are respectively provided or established for mobile subscriber identification modules, SIM (3), by the mobile radio network (1).

3. A method according to claim 1 or claim 2, **characterized in that** the first configuration data set will be sent to the mobile terminal (2) by means of a short message, preferably by means of a short message that is not visible for the user of the mobile terminal (2).

4. A method for the at least partially automatic configuration of a mobile terminal (2) that is operable with a mobile subscriber identification module, SIM (3), in a mobile radio network (1),
in particular according to a GSM, GPRS, UMTS and/or LTE radio network standard,
after the preferably first registration of the mobile terminal (2) with the mobile subscriber identification module, SIM (3), in the mobile radio network (1), comprising the following steps carried out by the mobile terminal (2) or by the mobile subscriber identification module, SIM (3):
a) sending a short message from the mobile terminal (2) to a configuration device of the mobile radio network (1),
wherein the short message contains data which identify the mobile subscriber identification module, SIM (3), and data which identify the mobile terminal (2);
b) receiving a first configuration data set and a second configuration data set by the mobile terminal (2),
wherein the first configuration data set contains mobile network operator specific data for the mobile subscriber identification module, SIM (3) and the second configuration data set contains terminal specific data for the mobile terminal (2);
c) installing the first configuration data set by the mobile subscriber
identification module, SIM (3);
and
d) installing the second configuration data set by the mobile terminal (2);
**characterized in that**
the second configuration data set will be received via a communication connection, session (27), established as ip connection between the mobile terminal (2) and the configuration device of the mobile radio network (1), wherein
the mobile terminal (2) will receive a short message, which short message is not visible for the user of the mobile terminal (2), for establishing the communication connection configured as ip connection, wherein the non-visible short message contains data for establishing the communication connection, session (27), configured as ip connection, comprising addressing data for addressing a database (8) of the configuration device which manages terminal specific data about functions, applications and/or services supported by mobile terminals (2) and/or authentication data for authenticating the mobile terminal (2) with respect to the database, Device Management Server, (8) of the configuration device which manages terminal specific data about functions, applications and/or services supported by mobile terminals (2), and an application carried out on the mobile subscriber identification module, SIM (3), is configured and/or adapted to determine whether the actual combination or mating of the mobile terminal used with the mobile subscriber identification module, SIM (3), has already been used at a former time.

5. A method according to claim 4, **characterized in that** the first configuration data set will be received by means of a short message, preferably by means of a short message that is not visible for the user of the mobile terminal (2).

6. A method according to claim 4 or claim 5, **characterized in that** upon or with the preferably first registration of the mobile terminal (2) with the mobile subscriber identification module, SIM (3) in the mobile radio network (1) the application will be carried out on the mobile subscriber identification module, SIM (3), wherein within the scope of carrying out the application, the short message containing data which identify the mobile subscriber identification module, SIM (3) and data which identify the mobile terminal (2) will be preferably automatically sent to the configuration device of the mobile radio network (1).

7. A method according to claim 6, **characterized in that** the application on the mobile subscriber identification module, SIM (3) is configured and/or adapted to gather at least two recently used combinations and/or matings of mobile terminals used with the mobile subscriber identification module, SIM (3), and to memorize them by means of the mobile subscriber identification module, SIM (3), wherein preferably the data which identify the respective mobile terminal will be allocated to the data which identify the mobile subscriber identification module, SIM (3).

8. A method according to claim 4, **characterized in that** the application on the mobile subscriber identification module, SIM (3), will carry out a comparison between the actually used combination or mating and a previously stored combination or mating and if these combinations or matings coincide, no configuration will take place.

## Revendications

1. Procédé de configuration au moins partiellement automatique d'un terminal mobile (2) fonctionnant dans un réseau radio mobile (1) avec un module d'identification d'abonnés mobiles, SIM (3),
notamment selon un standard de réseau radio GSM, GPRS, UMTS et/ou LTE,
après de préférence le premier enregistrement du terminal mobile (2) avec le module d'identification d'abonnés mobiles, SIM (3) dans le réseau radio mobile (1),
comprenant les étapes suivantes exécutées par le réseau radio mobile (1) de:
a) recevoir un message court dans un module de réception, SMSC, d'un dispositif de configuration du réseau radio mobile (1),
le message court contenant des données, qui identifient le module d'identification d'abonnés mobiles, SIM (3), et des données, qui identifient le terminal mobile (2);
b) transmettre le message court reçu à partir du module de réception, SMSC, à un premier module de contrôle (5) du dispositif de configuration et à un deuxième module de contrôle (7, 8) du dispositif de configuration;
c) déterminer des données spécifiques de l'opérateur de réseau radio mobile pour le module d'identification d'abonnés mobiles, SIM (3) par moyen du premier module de contrôle (5) sur la base des données, qui identifient le module d'identification d'abonnés mobiles, SIM (3);
d) générer un premier jeu de données de configuration par le premier module de contrôle (5),
le jeu de données de configuration contenant des données spécifiques de l'opérateur de réseau radio mobile pour le module d'identification d'abonnés mobiles, SIM (3);
e) déterminer des données spécifiques de terminaux pour le terminal mobile (2) par moyen du deuxième module de contrôle (7, 8) sur la base des données, qui identifient le terminal mobile (2);
f) générer un deuxième jeu de données de configuration par moyen du deuxième module de contrôle (7, 8),
le jeu de données de configuration contenant des données spécifiques de terminaux pour le terminal mobile (2);
et
g) envoyer le premier jeu de données de configuration et le deuxième jeu de données de configuration au terminal mobile (2);
**caractérisé en ce que**
le deuxième jeu de données de configuration sera envoyé au terminal mobile (2) via une liaison de communication, session (27), établie comme une connexion IP, entre le deuxième module de contrôle (8) et le terminal mobile (2), dans lequel
le deuxième module de contrôle enverra un message court au terminal mobile (2), lequel message court n'est pas visible pour l'utilisateur du terminal mobile (2), pour établir la liaison de communication, session (27), configurée comme une connexion IP, le message court contenant des données pour établir la liaison de communication, session (27), configurée comme une connexion IP, comprenant des données d'adressage pour adresser une base de données (8), qui gère des données spécifiques de terminaux par rapport à des fonctions, à des applications et/ou à des services soutenus par des terminaux mobiles (2), et/ou des données d'authentification pour authentifier le terminal mobile (2) par rapport à la base de données (8), qui gère des données spécifiques de terminaux par rapport à des fonctions, à des applications et/ou à des services soutenus par des terminaux mobiles (2),
si la liaison de communication, session (27), configurée comme connexion IP, est établie, le deuxième module de contrôle (7, 8) lira des informations sur des fonctions, des applications et/ou des services soutenus par le terminal mobile (2) dans le terminal mobile (2), sur la base de ces informations le module demandera les données spécifiques de terminaux par rapport à des fonctions, à des applications et/ou à des services soutenus par des terminaux mobiles (2) à la base de données (8) et générera le deuxième jeu de données de configuration sur la base des données demandées, et
une application exécutée sur le module d'identification d'abonnés mobiles, SIM (3), est configurée et/ou adaptée pour déterminer si la combinaison actuelle ou l'accouplement actuel du terminal mobile utilisé avec le module d'identification d'abonnés mobiles, SIM (3), a été utilisé(e) déjà à un instant temporel précédent.

2. Procédé selon la revendication 1, **caractérisé en ce que** le premier module de contrôle (5) du dispositif de configuration détermine des données spécifiques de l'opérateur de réseau radio mobile pour le module d'identification d'abonnés mobiles, SIM (3), en interrogeant une base de données (6), des données spécifiques de l'opérateur de réseau radio mobile par rapport à des fonctions, à des applications et/ou à des services du réseau radio mobile étant gérées dans la base de données (6), lesquels fonctions, applications et/ou services sont respectivement prévus ou établis pour des modules d'identification d'abonnés mobiles, SIM (3), par les réseau radio mobile (1).

3. Procédé selon la revendication 1 ou la revendication 2, **caractérisé en ce que** le premier jeu de données de configuration sera envoyé au terminal mobile (2) par moyen d'un message court, de préférence par moyen d'un message court, qui n'est pas visible pour l'utilisateur du terminal mobile (2).

4. Procédé de configuration au moins partiellement automatique d'un terminal mobile (2) fonctionnant dans un réseau radio mobile (1) avec un module d'identification d'abonnés mobiles, SIM (3),
notamment selon un standard de réseau radio GSM, GPRS, UMTS et/ou LTE,
après de préférence le premier enregistrement du terminal mobile (2) avec le module d'identification d'abonnés mobiles, SIM (3) dans le réseau radio mobile (1),
comprenant les étapes suivantes exécutées par le terminal mobile (2) avec le module d'identification d'abonnés mobiles, SIM (3) de:
a) envoyer un message court à partir du terminal mobile (2) à un dispositif de configuration du réseau radio mobile (1),
le message court contenant des données, qui identifient le module d'identification d'abonnés mobiles, SIM (3), et des données, qui identifient le terminal mobile (2);
b) recevoir un premier jeu de données de configuration et un deuxième jeu de données de configuration par le terminal mobile (2),
le premier jeu de données de configuration contenant des données spécifiques de l'opérateur de réseau radio mobile pour le module d'identification d'abonnés mobiles, SIM (3), et le deuxième jeu de données de configuration contenant des données spécifiques de terminaux pour le terminal mobile (2);
c) installer le premier jeu de données de configuration par moyen du
module d'identification d'abonnés mobiles, SIM (3);
et
d) installer le deuxième jeu de données de configuration par moyen du terminal mobile (2);
**caractérisé en ce que**
le deuxième jeu de données de configuration sera reçu via une liaison de communication, session (27), établie comme une connexion IP, entre le terminal mobile (2) et le dispositif de configuration du réseau radio mobile (1), dans lequel
le terminal mobile (2) recevra un message court, lequel message court n'est pas visible pour l'utilisateur du terminal mobile (2), pour établir la liaison de communication, session (27), configurée comme une connexion IP, le message court non visible contenant des données pour établir la liaison de communication, session (27), configurée comme une connexion IP, comprenant des données d'adressage pour adresser une base de données (8) du dispositif de configuration, laquelle gère des données spécifiques de terminaux par rapport à des fonctions, à des applications et/ou à des services soutenus par des terminaux mobiles (2), et/ou des données d'authentification pour authentifier le terminal mobile (2) par rapport à la base de données (Device Management Server) (8), qui gère des données spécifiques de terminaux par rapport à des fonctions, à des applications et/ou à des services soutenus par des terminaux mobiles (2), et
une application exécutée sur le module d'identification d'abonnés mobiles, SIM (3), est configurée et/ou adaptée pour déterminer si la combinaison actuelle ou l'accouplement actuel du terminal mobile utilisé avec le module d'identification d'abonnés mobiles, SIM (3), a été utilisé(e) déjà à un instant temporel précédent.

5. Procédé selon la revendication 4, **caractérisé en ce que** le premier jeu de données de configuration est reçu par moyen d'un message court, de préférence par moyen d'un message court invisible pour l'utilisateur du terminal mobile (2).

6. Procédé selon la revendication 4 ou la revendication 5, **caractérisé en ce que** dans le moment ou avec de préférence le premier enregistrement du terminal mobile (2) avec le module d'identification d'abonnés mobiles, SIM (3) dans le réseau radio mobile (1), l'application sera exécutée sur le module d'identification d'abonnés mobiles, SIM (3), dans lequel le message court contenant des données, qui identifient le module d'identification d'abonnés mobiles, SIM (3), et des données, qui identifient le terminal mobile (2), est envoyé, de préférence automatiquement, au dispositif de configuration du réseau radio mobile (1) dans le cadre de l'exécution de l'application.

7. Procédé selon la revendication 6, **caractérisé en ce que** l'application sur le module d'identification d'abonnés mobiles, SIM (3) est configurée et/ou adaptée pour saisir au moins deux combinaisons ou deux accouplements récemment utilisés de terminaux mobiles utilisés avec le module d'identification d'abonnés mobiles, SIM (3), et pour mémoriser ceux-ci par moyen du module d'identification d'abonnés mobiles, SIM (3), les données, qui identifient le terminal mobile respectif étant de préférence attribuées aux données, qui identifient le module d'identification d'abonnés mobiles, SIM (3).

8. Procédé selon la revendication 4, **caractérisé en ce que** l'application sur le module d'identification d'abonnés mobiles, SIM (3), effectue une comparaison entre la combinaison ou l'accouplement actuellement utilisé(e) et une combinaison ou un accouplement mémorisée précédemment et si ces combinaisons ou ces accouplements coïncident, aucune configuration ne se fera.
